# EUROPEAN PATENT APPLICATION

(11) **EP 4 114 068 A1**
(43) Date of publication of application: **04.01.2023**
(21) Application number: 20921414.7
(22) Date of filing: 27.02.2020
(51) Int. Cl.: H04W 16/28, H04W 16/30, H04W 4/42

(54) **TERMINAL, WIRELESS COMMUNICATION METHOD, AND BASE STATION**

(71) Applicant: NTT DOCOMO, INC., Chiyoda-Ku Tokyo 100-6150 (JP)
(72) Inventor: MATSUMURA, Yuki, Tokyo 100-6150 (JP); NAGATA, Satoshi, Tokyo 100-6150 (JP)
(74) Representative: Hoffmann Eitle
(86) International application number: PCT/JP2020/008022
(87) International publication number: WO 2021/171477

(57) **Abstract**

A terminal according to an aspect of the present disclosure includes: a receiving section that receives information on change of a correspondence relation between one or more antenna points disposed on a movement path and one or more antenna groups including the one or more antenna points; and a control section that controls reception of at least one of a downlink channel and a reference signal, based on the information. According to an aspect of the present disclosure, communication can be appropriately implemented even in a case where the distributed MIMO technology is employed.

## Description

### Technical Field

The present disclosure relates to a terminal, a radio communication method, and a base station in next-generation mobile communication systems.

### Background Art

In a Universal Mobile Telecommunications System (UMTS) network, the specifications of Long-Term Evolution (LTE) have been drafted for the purpose of further increasing high speed data rates, providing lower latency and so on (see Non-Patent Literature 1). In addition, for the purpose of further high capacity, advancement and the like of the LTE (Third Generation Partnership Project (3GPP) Release (Rel.) 8 and Rel. 9), the specifications of LTE-Advanced (3GPP Rel. 10 to Rel. 14) have been drafted.

Successor systems of LTE (e.g., referred to as "5th generation mobile communication system (5G)," "5G+ (plus)," 6th generation mobile communication system (6G), "New Radio (NR)," "3GPP Rel. 15 (or later versions)," and so on) are also under study.

### Citation List

### Non-Patent Literature

Non-Patent Literature 1: 3GPP TS 36.300 V8.12.0 "Evolved Universal Terrestrial Radio Access (E-UTRA) and Evolved Universal Terrestrial Radio Access Network (E-UTRAN); Overall description; Stage 2 (Release 8)," April, 2010

### Summary of Invention

### Technical Problem

For NR in Rel. 17 or later versions, in communication between the user terminal (UE (User Equipment)) and a network (NW, for example, a base station), studies have been conducted about expansion of area coverage utilizing distributed MIMO (Multi Input Multi Output) based on millimeter waves (mmWave).

Whether the distributed MIMO technology is employed in Rel. 17 or later versions has been discussed. However, sufficient studies have not been conducted about how to achieve MIMO transmission by using a plurality of antenna points. Unless this is clarified, an increase in communication throughput may be suppressed.

In a future radio communication system (for example, NR in Rel. 17 or later versions), it is assumed to use a beam transmitted from a transmission point ((for example, an antenna point or an antenna group)) disposed on the path of a moving object (such as a train) moving at high speed to achieve radio communication at the moving object.

However, sufficient studies have not been conducted about how to control radio communication at a moving object by using a beam transmitted from each transmission point.

Thus, an object of the present disclosure is to provide a terminal, a radio communication method, and a base station that can appropriately control radio communication at a moving object even in a case when where the distributed MIMO technology is employed.

### Solution to Problem

A terminal according to an aspect of the present disclosure includes: a receiving section that receives information on change of a correspondence relation between one or more antenna points disposed on a movement path and one or more antenna groups including the one or more antenna points; and a control section that controls reception of at least one of a downlink channel and a reference signal, based on the information.

### Advantageous Effects of Invention

According to an aspect of the present disclosure, communication can be appropriately implemented even in a case where the distributed MIMO technology is employed.

### Brief Description of Drawings

FIG. 1 is a diagram to show an example of an SFN in a tunnel;
FIGS. 2A and 2B are diagrams of an example in which a plurality of antennas or a plurality of TRPs are disposed around a base station;
FIGS. 3A and 3B are diagrams to show an example of a structure of antennas disposed around the base station;
FIG. 4 is a diagram to show an example of communication based on an antenna configuration (1);
FIG. 5 is a diagram to show an example of communication based on an antenna configuration (2);
FIGS. 6A and 6B are diagrams to show an example of communication based on the antenna configuration (2);
FIG. 7 is a diagram to show an example of transition of the correspondence relation between an antenna point and an antenna group inside a structural object along with movement of a UE included in an HST;
FIG. 8 is a diagram to show an example of transition of the correspondence relation between an antenna point and an antenna group inside a structural object along with movement of a UE included in an HST;
FIGS. 9A and 9B are diagrams to show an example of information on the transition orders of a set of one or more antenna points and the transition orders of one or more antenna groups;
FIGS. 10A and 10B are diagrams to show an example of information on a transition number of a set of one or more antenna points per unit time and a transition number of one or more antenna groups per unit time;
FIGS. 11A to 11D are diagrams to show an example of information on a transition number of a set of one or more antenna points per unit time and a transition number of one or more antenna groups per unit time;
FIG. 12 is a diagram to show an example of information on the interval between transmission points;
FIGS. 13A and 13B are diagrams to show an exemplary method of estimating the moving speed of a UE included in an HST;
FIG. 14 is a diagram to show an exemplary method of estimating the moving speed of a UE included in an HST;
FIG. 15 is a diagram to show an exemplary method by which a NW estimates the moving speed of a UE;
FIGS. 16A and 16B are diagrams to show an example of QCL configuration along with transition of antenna points/antenna groups;
FIGS. 17A and 17B are diagrams to show an example of QCL configuration along with transition of antenna points/antenna groups;
FIGS. 18A and 18B are diagrams to show an example of QCL configuration along with transition of antenna points/antenna groups;
FIG. 19 is a diagram to show an example of the correspondence between an antenna group and a cell ID when antenna points/antenna groups transition with time;
FIG. 20 is a diagram to show an example of the correspondence between an antenna group and a sequence hopping pattern when antenna points/antenna groups transition with time;
FIG. 21 is a diagram to show an example of the correspondence between an antenna group and a cell ID when antenna points/antenna groups transition with time;
FIGS. 22A and 22B are diagrams to show an example of information on transition of antenna groups and cell IDs;
FIG. 23 is a diagram to show an example of the correspondence between an antenna group and a cell ID when antenna points/antenna groups transition with time;
FIG. 24 is a diagram to show an exemplary antenna group that follows movement of a UE included in an HST;
FIG. 25 is a diagram to show an example of a schematic structure of a radio communication system according to one embodiment;
FIG. 26 is a diagram to show an example of a structure of a base station according to one embodiment;
FIG. 27 is a diagram to show an example of a structure of a user terminal according to one embodiment; and
FIG. 28 is a diagram to show an example of a hardware structure of the base station and the user terminal according to one embodiment.

### Description of Embodiments

In successor systems of LTE (e.g., referred to as "5th generation mobile communication system (5G))," "5G+ (plus)," "New Radio (NR)," and so on), a radio communication method using millimeter waves has been introduced. In Rel. 15 NR, hybrid beamforming based on massive MIMO (for example, beam management) has been introduced, and in Rel. 16 NR, distributed MIMO (multi TRP) has been introduced to improve the communication speed and reliability of a downlink shared channel (PDSCH).

For NR in Rel. 17 or later versions, the distributed MIMO (multi TRP) is expected to improve the communication speed and reliability of the channels other than the downlink shared channel (PDSCH). For NR in Rel. 17 or later versions, beam management is expected to be improved in a scenario using a moving body such as a train which moves at high speed (HTS (High Speed Train)).

However, the improvement of the communication speed and reliability is of a best effort type and is limited in the area to which improvement is applied.

Compared to 5G described above, successor systems of NR (also referred to as, for example, 5G+, 6G, and so on) require a high data rate/capacity, a wide coverage, low energy/costs, low latency, high reliability, multiple connections, and so on. In the present disclosure, the phrase "A/B" may mean that "at least one of A and B."

In response to requirements in 6G described above, the best effort type communication is expected to be shifted to quality assurance type communication. High speed/high reliability communication is expected to be expanded to all-area application instead of area-limited application.

A radio communication method employing millimeter waves poses a plurality of problems. The problems include, for example, an increase in propagation loss caused by an increased communication distance, an increase in non-line of sight loss caused by high straightness of radio waves, difficulty in implementing high-order SU-MIMO (Single User MIMO) due to few paths in multipath, an increase in device installation density caused by increased sizes of devices, and the like.

In LTE systems, a single frequency network ((SFN), each antenna has an identical cell ID) is operated that employs a plurality of small antennas within an architectural structure (for example, a tunnel, a building, or the like). The SFN is a method for simultaneously transmitting the same signal in the same physical resource block (PRB) using a plurality of antennas, and UEs receiving the signal assume that the signal has been transmitted from one point.

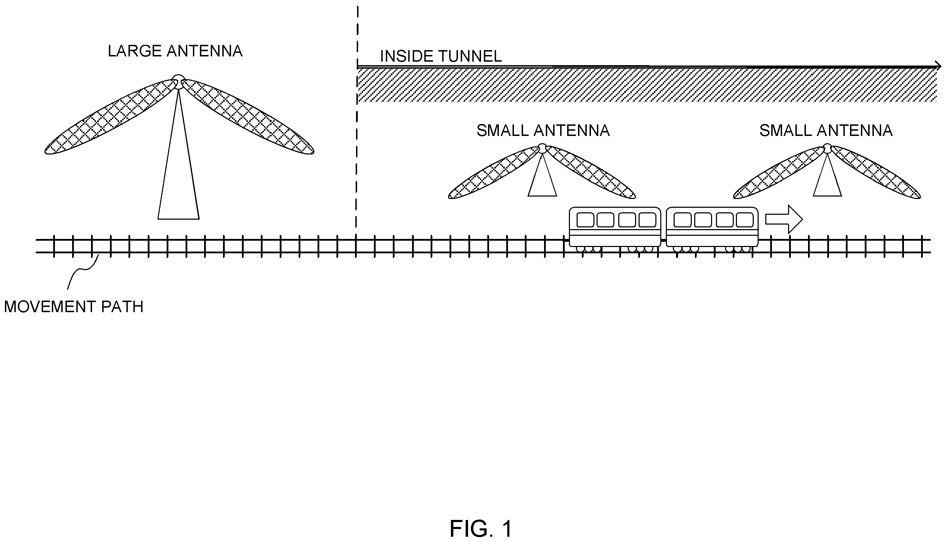

FIG. 1 is a diagram to show an example of an SFN in a tunnel. In FIG. 1, for example, a large antenna is installed outside the tunnel (for example, near a tunnel entrance), and small antennas are installed inside the tunnel. The large antenna may be, for example, an antenna with a transmission power of approximately 1 to 5 W. The small antenna may, for example, be an antenna with a transmission power of approximately 250 mW. The large antenna may transmit downlink (DL) signals to the inside and outside of tunnel, and the small antenna may transmit DL signals to the inside of the tunnel. The large antenna may perform handover before a UE enters the tunnel. The large antenna and the small antennas in FIG. 1 may simultaneously transmit the same DL signal for one UE in the same PRB. Note that the arrangement and transmission power of the antennas in FIG. 1 are only illustrative and are not limited to this example. The SFN in the tunnel may be replaced with an IMCS (Inbuilding Mobile Communication System).

Note that, in the present disclosure, "transmission of DL signals from the antenna" may be replaced with "reception of uplink (UL) signals at the antenna." Note that "reception of DL signals at the UE" may be replaced with "transmission of UL signals from the UE."

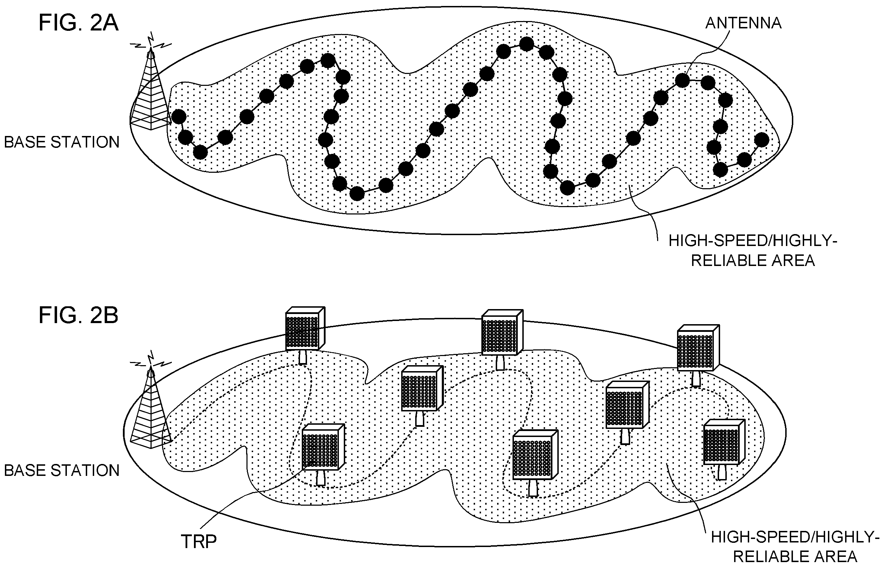

A method has been under study in which a large number of antenna points are installed everywhere within the area for area expansion employing distributed MIMO utilizing millimeter waves. For example, as shown in FIG. 2A, a plurality of high-frequency antennas having a relatively narrow coverage may be installed everywhere within the area and connected together in series, with a low-frequency base station that has a relatively wide coverage being located at a start point of the connection to ensure a high speed and high reliable area.

Note that the low-frequency base station having a relatively wide coverage as used herein may simply be referred to as a base station. The high-frequency antenna having a relatively narrow coverage may simply be referred to as an antenna.

The plurality of antennas may be installed on a ceiling/wall inside a building as well as being installed outdoors for operation. For example, the antennas may be installed near an illumination light source in the building, and in this case, are likely to be within a line of sight to a plurality of UEs inside the building, enabling a reduction in propagation loss.

FIG. 2A is a diagram showing an example in which a plurality of antennas are disposed around the base station. For example, the method for installing antenna points everywhere within the area as shown in FIG. 2A can be implemented at low cost. However, the utilization efficiency of resources is difficult to optimize, and an increased distance to the high-frequency antenna disadvantageously leads to an increased propagation loss.

On the other hand, studies have also been conducted about a method in which some of the functions of the base station is installed around high-frequency antennas for area expansion employing distributed MIMO utilizing millimeter waves. This method is similar to a method in which a plurality of transmission/reception points (TRPs) are disposed around the base station.

FIG. 2B is a diagram showing an example in which a plurality of TRPs are disposed around the base station. For example, the method in which a plurality of TRPs are extended around the base station as shown in FIG. 2B allows resource control for each TRP and enables a reduction in propagation loss by utilizing optical fibers or the like.

Note that the "antenna point" may mean an "antenna corresponding to a physical antenna element," or an "antenna corresponding to a plurality of physical antenna points." The antenna port may mean an "antenna for a signal processing unit including one or more antenna points," a "signal processing unit corresponding to one or more antenna points," a "logical entity corresponding to signals output from one or more antenna points," and so on. The antenna group may mean a "plurality of antennas including one or more antenna points," or a "plurality of antennas including one or more antenna ports."

The antenna point as used herein may be replaced with an "antenna end," an "antenna port," an "antenna group," an "antenna element," an "antenna position," a "high-frequency antenna point," a "high-frequency antenna end," a "high-frequency antenna port," a "high-frequency antenna group," a "high-frequency antenna element," a "high-frequency antenna position," and so on.

The "antenna group" as used herein may be replaced with an "antenna set," a "high-frequency antenna group," a "high-frequency antenna set," and so on. The antenna group may be a plurality of antenna points physically continuous through a wire (for example, a leakage coaxial cable).

Two configurations have been under study as methods in which a large number of antenna points are installed everywhere within the area for area expansion employing distributed MIMO utilizing millimeter waves.

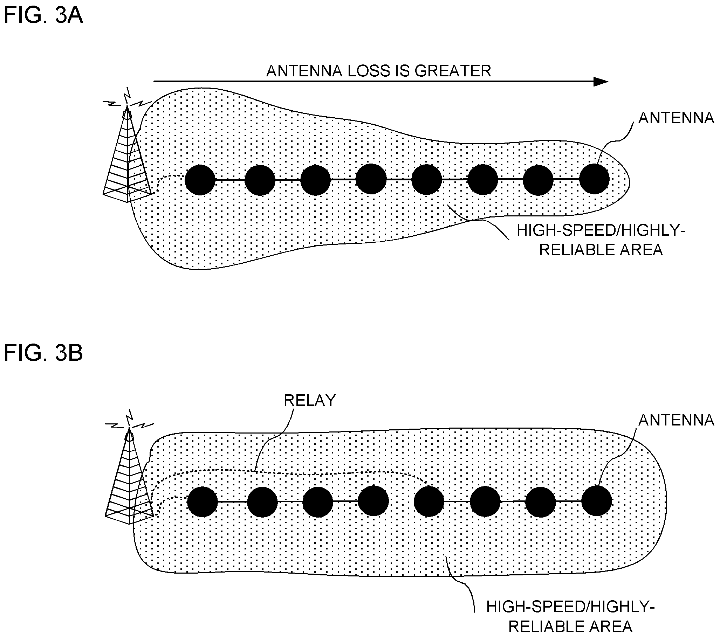

As one of the configurations, a configuration (antenna configuration (1)) has been under study in which high-frequency antennas are connected together by electric wires to continuously extend the antennas in a certain direction, as shown in FIG. 3A. This antenna configuration can reduce configuration costs but is expected to involve a greater antenna loss near antennas relatively far from the base station.

As the other configuration, a configuration (antenna configuration (2)) has been under study in which signals are relayed to some of the antennas (for example, optical fibers, IAB, or the like is used for the relay), as shown in FIG. 3B. This antenna configuration can reduce the antenna loss even for antennas at relatively long distances from the base station.

In the antenna configuration (1), the same signal may be transmitted from all antenna points. In a case where the UE is located near one of a plurality of high-frequency antenna point, DL communication with the UE is enabled. At this time, the NW need not recognize which antenna corresponds to the antenna near which the UE is located, allowing overhead to be suppressed. However, when the same transmission signal is transmitted from all the antenna points, locational frequency utilization efficiency decreases.

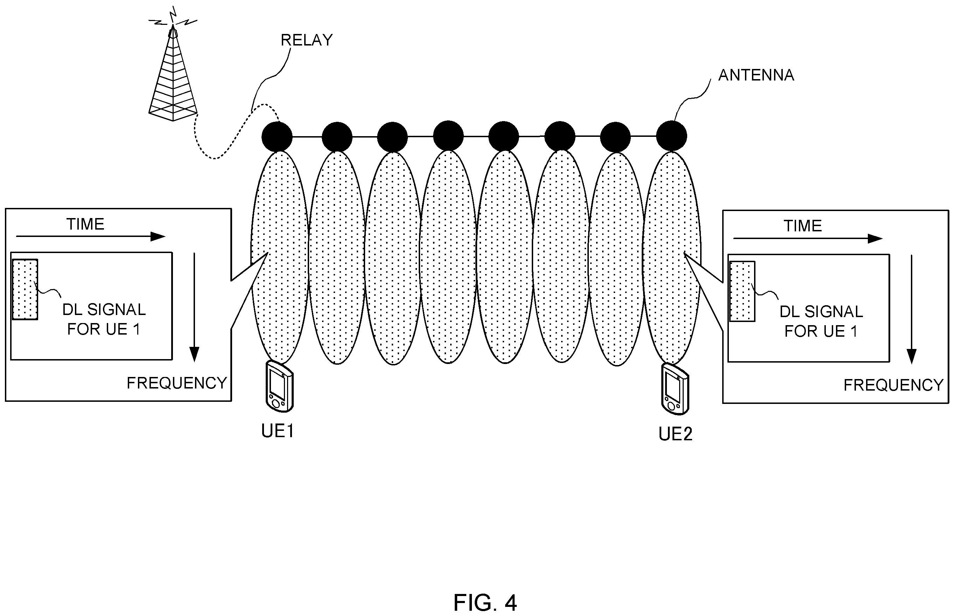

FIG. 4 is a diagram to show an example of communication based on the antenna configuration (1). In FIG. 4, a high-frequency antenna transmits a DL signal directed to UE 1. In this case, UE 1 near the high-frequency antenna can communicate. Only low contribution to improvement of a reception signal received by UE 1 is made by transmission signals transmitted, to UE 1, from high-frequency antennas relatively far from the base station. Consequently, frequency resources are preferably utilized for UE 2 also located near a high-frequency antenna.

To solve the problem with the antenna configuration (1), the series of antenna points may be separated into a plurality of antenna points, and antenna groups may be provided each of which includes a plurality of consecutive antenna points, and each of the antenna groups may transmit an independent transmission signal.

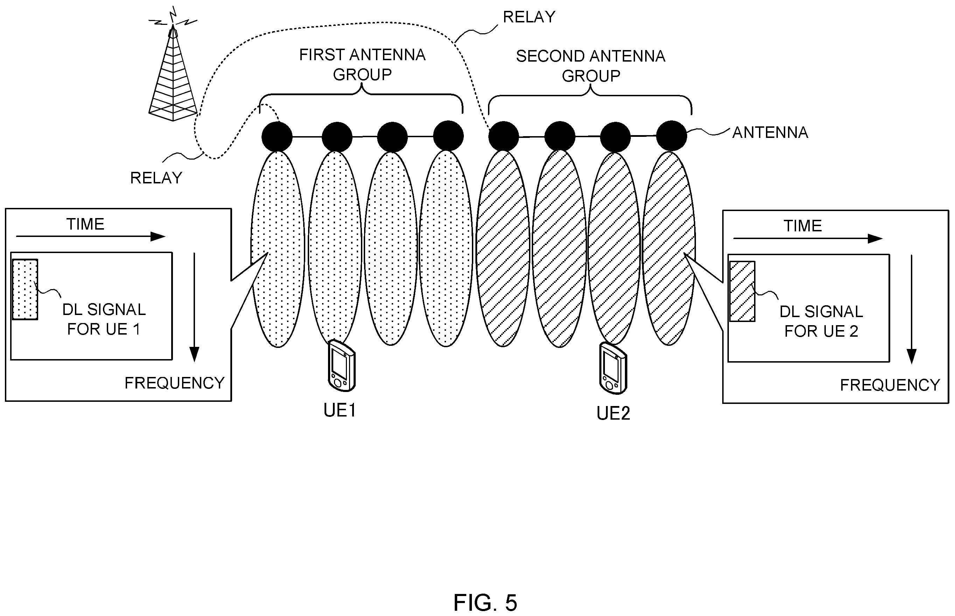

FIG. 5 is a diagram to show an example of communication based on the antenna configuration (2). For example, as shown in FIG. 5, antenna points relatively close to the base station (antenna points #1 to #4) are designated as a first antenna group and antenna points relatively far from the base station (antenna points #5 to #8) are designated as a second antenna group, UE 1 located near the first antenna group and UE 2 located near the second antenna group can appropriately communicate with the NW.

Note that in the configuration in the example in FIG. 5, the base station may include a function to schedule each antenna group to perform relaying for each antenna group (for example, relaying based on extension of optical fibers or the like) or that each antenna group may include some of the functions of base station.

In the antenna configuration (2), each antenna group may transmit an identical DL signal/reference signal (RS). In the antenna configuration (2), some of the antenna groups may transmit an identical (common) DL signal/RS, whereas other antenna groups may transmit a different DL signal/RS.

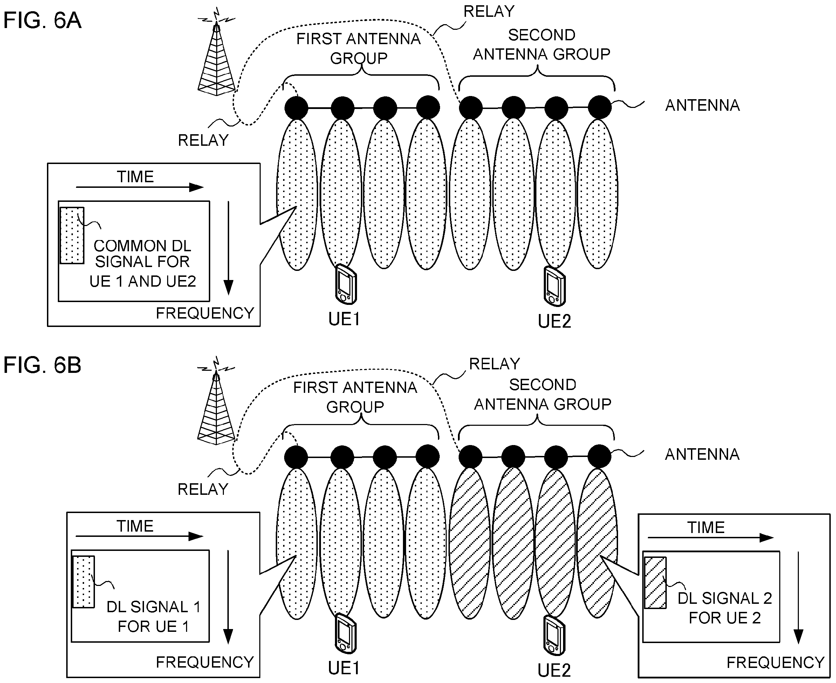

FIGS. 6A and 6B are diagrams to show an example of communication based on the antenna configuration (2). In FIG. 6A, the first antenna group and the second antenna group transmit a common DL signal for UE 1 and UE 2. On the other hand, in FIG. 6B, the first antenna group transmits DL signal 1 to UE 1, whereas the second antenna group transmits DL signal 2 to UE 2.

### (TCI, Spatial Relation, and QCL)

For NR, studies have been conducted about control of processing of reception (for example, at least one of reception, demapping, demodulation, and decoding) and transmission (for example, at least one of transmission, mapping, precoding, modulation, and coding) of at least one of a signal and a channel (hereinafter represented as a signal/channel) by the UE based on a transmission configuration indication state (TCI state).

The TCI state may represent a state applied to downlink signals/channels. A state corresponding to a TCI state applied to uplink signals/channels may be represented as a spatial relation.

The TCI state is information related to quasi-co-location (QCL) of the signal/channel and may also be referred to as a spatial reception parameter, spatial relation information, and so on. The TCI state may be configured for the UE for each channel or signal.

Note that the TCI state as used herein may be replaced with at least one of a DL TCI state, a UL TCI state, a unified TCI state, the spatial relation, the QCL, a QCL relation, a QCL assumption, and a QCL type.

The QCL is an indicator for statistical properties of the signal/channel. For example, in a case where a certain signal/channel and another signal/channel are in a QCL relation, this may mean that an assumption can be made that at least one of a Doppler shift, a Doppler spread, an average delay, a delay spread, and a spatial parameter (for example, a spatial Rx parameter) is identical between the plurality of different signals/channels (the signals/channels are in a QCL relation in terms of at least one of the listed above).

Note that the spatial Rx parameter may correspond to a reception beam of the UE (for example, a reception analog beam) and that the beam may be identified based on the spatial QCL. The QCL as used herein (or at least one element of the QCL) may be replaced with sQCL (spatial QCL).

A plurality of types of QCL (QCL type) may be specified. For example, four QCL types A to D including different parameters (or parameter sets) that can be assumed to be identical may be provided, and the parameters (that may also be referred to as QCL parameters) are illustrated below:
- QCL type A (QCL-A): Doppler shift, Doppler spread, average delay, and delay spread,
- QCL type B (QCL-B): Doppler shift and Doppler spread,
- QCL type C (QCL-C): Doppler shift and average delay,
- QCL type D (QCL-D): spatial Rx parameter.

QCL assumption may refer to the assumption that a certain control resource set (CORESET), channel, or reference signal is in a particular QCL (for example, QCL type D) relation with another CORESET, channel, or reference signal, the assumption being made by the UE.

The UE may determine at least one of a transmission beam (Tx beam) and a reception beam (Rx beam) for the signal/channel based on the TCI state or QCL assumption of the signal/channel.

The TCI state may be, for example, information related to the QCL between a target channel (in other words, a reference signal (RS) for the channel) and another signal (for example, another RS). The TCI state may be configured (indicated) through higher layer signaling, physical layer signaling, or a combination thereof.

For example, the higher layer signaling as used herein may be any one or combinations of RRC (Radio Resource Control) signaling, MAC (Medium Access Control) signaling, broadcast information, and the like.

For example, the MAC signaling may use MAC control elements (MAC CE), MAC Protocol Data Units (PDUs), and the like. For example, the broadcast information may be master information blocks (MIBs), system information blocks (SIBs), minimum system information (RMSI (Remaining Minimum System Information)), other system information (OSI), and so on.

The physical layer signaling may be, for example, downlink control information (DCI).

The channel for which the TCI state or the space relation is configured (indicated) may be at least one of, for example, a downlink shared channel ((PDSCH) Physical Downlink Shared Channel), a downlink control channel ((PDCCH) Physical Downlink Control Channel), an uplink shared channel ((PUSCH) Physical Uplink Shared Channel), and an uplink control channel ((PUCCH) Physical Uplink Control Channel).

The RS that is in a QCL relation with the channel may be, at least one of, for example, a synchronization signal block (SSB), a channel state information reference signal (CSI-RS), a sounding reference signal (SRS), a tracking CSI-RS (also referred to as a tracking reference signal (TRS)), and a QCL detection reference signal (also referred to as a QRS).

The SSB is a signal block including at least one of a primary synchronization signal (PSS), a secondary synchronization signal (SSS), and a broadcast channel ((PBCH) Physical Broadcast Channel). The SSB may also be referred to as an SS/PBCH block.

An information element ("TCI-state IE" in RRC) of the TCI state configured through higher layer signaling may include one or a plurality of pieces of QCL information ("QCL-Info"). The QCL information may include at least one piece of information related to the RS in a QCL relation (RS relation information) and information indicating the QCL type (QCL type information). The RS relation information may include information such as an RS index (for example, an SSB index, or a non-zero-power (NZP) CSI-RS resource ID (Identifier)), the index of the cell in which the RS is located, and the index of the BWP (Bandwidth Part) in which the RS is located.

In Rel. 15 NR, as the TCI state of at least one of the PDCCH and the PDSCH, both the RS for the QCL type A and the RS for the QCL type D or only the RS for the QCL type A may be configured for the UE.

In a case where the TRS is configured as the RS for the QCL type A, unlike a demodulation reference signal (DMRS) for the PDCCH or the PDSCH, the TRS is expected to be transmitted such that the same TRS is periodically transmitted for an extended period of time. The UE can measure the TRS and calculate the average delay, the delay spread, and the like.

In a case where, for the UE, the TRS is configured as the RS for the QCL type A, in the TCI state of the DMRS for the PDCCH or the PDSCH, the UE can assume that the DMRS for the PDCCH or the PDSCH is the same as the QCL type A parameters (average delay, delay spread, and the like) for the TRS. Thus, the type A parameters (average delay, delay spread, and the like) for the DMRS for the PDCCH or the PDSCH can be determined from measurement results for the TRS. When performing channel estimation for at least one of the PDCCH and the PDSCH, the UE can use the measurement results for the TRS to perform more accurate channel estimation.

In a case where the RS for the QCL type D is configured for the UE, the UE can use the RS for the QCL type D to determine the UE reception beam (spatial domain filter, and UE spatial domain reception filter).

The RS for the QCL type X for TCI state may mean the RS in the QCL type X relation with (the DMRS for) a certain channel/signal, and the RS may be referred to as a QCL source of the QCL type X for the TCI state.

### (HST)

In NR, it is assumed that a beam transmitted from a transmission point (for example, an antenna point or an antenna group) is used for communication with a terminal (hereinafter also referred to as UE) included in a moving object (HST (high speed train)) such as a fast-moving train.

It is assumed that it is difficult to appropriately perform control such as beam control and handover inside a structural object (for example, in a tunnel) when a moving object moves fast.

Beam control in an existing system (for example, before Rel. 15) is performed, for example, in the procedure of L1-RSRP report, beam notification (TCI state, spatial relation configuration, or activation), and reception beam evaluation.

Handover control is performed, for example, in the procedure of measurement report (L3-RSRP, L3-SINR report), handover indication, random access channel transmission, RRC connection completion.

When handover is performed inside a structural object in communication at a UE included in an HST, communication is potentially impossible or communication quality potentially significantly degrades. Thus, it is desirable to perform communication without handover at least inside a structural object.

To avoid handover, a SFN with the same cell ID can be established inside a structural object. However, in this case, a single cell is set for the entire inside of the structural object and cell capacity decreases, and thus phase error, synchronization error, and so on potentially occur between transmission points (for example, antenna points).

As described above, sufficient discussion has not been made on a method by which radio communication at a moving object by using a beam transmitted from each transmission point is controlled inside a structural object. Unless the control method is clarified, increase in communication throughput is potentially suppressed.

Thus, the inventors of the present invention came up with a method in which appropriately performing radio communication at a moving object inside a structural object by using a distributed MIMO technology utilizing a plurality of antenna points.

Embodiments according to the present disclosure will be described in detail with reference to the drawings as follows. Configurations described in aspects of each embodiment may be employed independently or may be employed in combination.

In the present disclosure, a moving object may be any object that moves at a certain speed or faster and may be, for example, a train, a car, a motorcycle, a ship, or the like. Communication between a UE included in a moving object and a transmission point ((for example, an antenna point or an antenna group)) may be directly performed between the UE and the transmission point or may be performed between the UE and the transmission point through the moving object (for example, an antenna installed at the moving object).

### (Radio Communication Method)

In each embodiment of the present disclosure, it is assumed that communication inside a structural object is performed between a UE included in a HST and at least one of one or more antenna points and one or more antenna groups. In the present disclosure, the number of antenna points included in each antenna group may be equal to or larger than one. A UE that performs communication with at least one of any antenna point and the antenna group may be or may not be notified of the number of antenna points included in each antenna group.

Note that, in the present disclosure, a UE included in a HST may be simply referred to as a UE. The present disclosure describes one or more antenna points and one or more antenna groups inside a structural object, but the present disclosure is also applicable to one or more antenna points and one or more antenna groups outside a structural object.

Note that the present disclosure mainly describes an example in which the number of antenna points included in one antenna group is four, but the number of antenna points included in one antenna group is merely exemplary and the present disclosure is not limited thereto.

### <First Embodiment>

The present embodiment will be described below with reference to a method by which a correspondence relation between one or more antenna points and one or more antenna groups disposed on a movement path inside a structural object is transitioned along with movement of a UE included in an HST.

Note that, in the present disclosure, "transition" may be mutually interpreted as "change", "update", "switch", "enable", "disable", "activate", "deactivate", "activate/deactivate", and so on.

### [Transition of Correspondence Relation Between Antenna Point and Antenna Group]

The correspondence (correspondence relation or association) between one or more antenna points and one or more antenna groups may transition in the units of antenna points. In other words, the UE may assume that the correspondence between one or more antenna points and one or more antenna groups transitions in the units of antenna points.

Specifically, the correspondence between one or more antenna points and one or more antenna groups may transition for each certain number (for example, M (M is an optional integer)) of antenna points at each elapse of a transition unit time.

In the present disclosure, the UE may be notified of M by higher layer signaling, physical layer signaling, or combination thereof. Alternatively, the UE may compute M from the moving speed of the UE. In this case, M may be relatively large when the moving speed of the UE is larger than a threshold value, or M may be relatively small when the moving speed of the UE is smaller than the threshold value. Note that computation of the moving speed of the UE will be described later in a second embodiment.

In the present disclosure, the transition unit time (tₙ - tₙ₋₁) may be an integral multiple of a time resource (for example, a symbol, a slot, a subslot, a subframe, or a radio frame) or may be T ms (T is an arbitrary value).

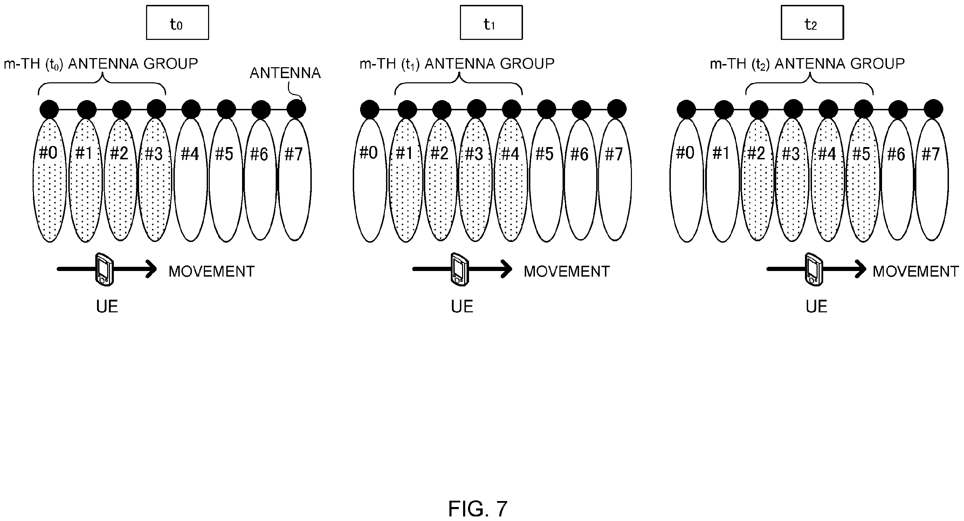

FIG. 7 is a diagram to show an example of transition of the correspondence relation between an antenna point and an antenna group inside the structural object along with movement of the UE included in the HST. As shown in FIG. 7, antenna points #0 to #3 correspond to the m-th (t₀) antenna group (m is an optional integer) at time t₀, antenna points #1 to #4 correspond to the m-th (t₁) antenna group at time t₁, and antenna points #2 to #5 correspond to the m-th (t₂) antenna group at time t₂.

Note that the same cell ID may be configured to the m-th (t) antenna group at optional time t when the correspondence relation between an antenna point and an antenna group transitions from time to to time t₂ in FIG. 7. Note that although FIG. 7 shows a case of M = 1, the value of M is not limited thereto. Note that a cell ID configured to an antenna group will be described later in a fourth embodiment.

The correspondence between one or more antenna points and one or more antenna groups may transition in the units of antenna groups. In other words, the UE may assume that the correspondence between one or more antenna points and one or more antenna groups transitions in the units of antenna groups.

Specifically, the correspondence between one or more antenna points and one or more antenna groups may transition for each certain number (for example, M' (M' is an optional integer)) of antenna points at each elapse of a certain transition unit time.

In the present disclosure, the UE may be notified of M' by higher layer signaling, physical layer signaling, or combination thereof. Alternatively, the UE may compute M' from the moving speed of the UE. In this case, M' may be relatively large when the moving speed of the UE is larger than a threshold value, or M' may be relatively small when the moving speed of the UE is smaller than the threshold value.

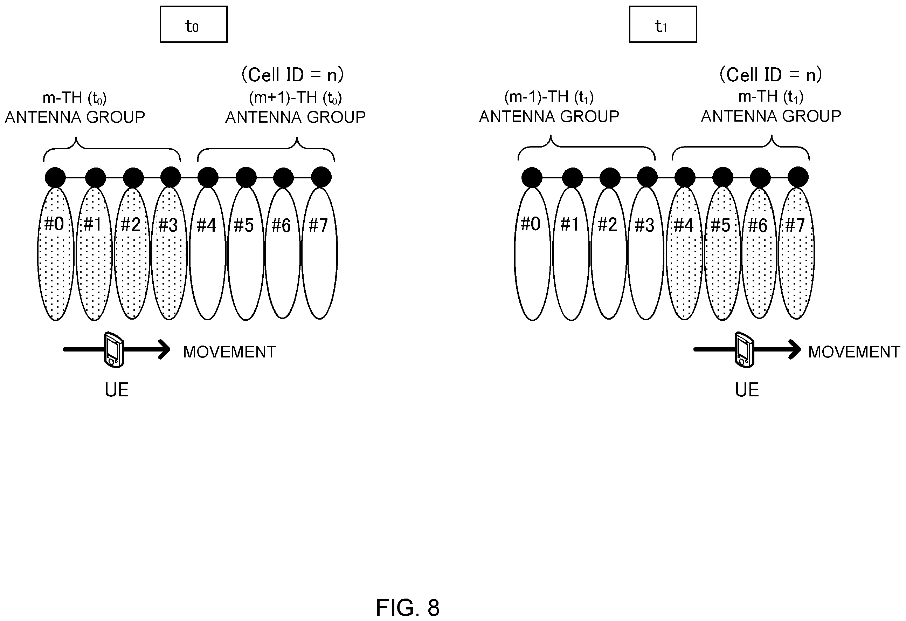

FIG. 8 is a diagram to show an example of transition of the correspondence relation between an antenna point and an antenna group inside the structural object along with movement of the UE included in the HST.FIG. 8 is a diagram to show an example of transition of the correspondence relation between an antenna point and an antenna group inside the structural object along with movement of the UE included in the HST. As shown in the example in FIG. 8, at time t₀, antenna points #0 to #3 correspond to the m-th (t₀) antenna group (m is an optional integer), and antenna points #4 to #7 correspond to the (m+1)-th (t₀) antenna group. At time t₁, antenna points #0 to #3 correspond to the (m-1)-th (t₁) antenna group (m is an optional integer), and antenna points #4 to #7 correspond to the m-th (t₁) antenna group.

Note that the same cell ID may be configured to the m-th (t) antenna group at optional time t when the correspondence relation between an antenna point and an antenna group transitions from time to to time t₂ in FIG. 8. Note that although FIG. 7 shows a case of M' = 1, the value of M' is not limited thereto.

### [Indication/Notification of Transition Order and Transition Number]

The UE may explicitly receive information on transition orders of the correspondence relation between an antenna point and an antenna group by higher layer signaling, physical layer signaling, or combination thereof. Alternatively, the UE may implicitly determine transition orders of the correspondence relation between an antenna point and an antenna group by higher layer signaling, physical layer signaling, or combination thereof.

The UE may receive information on at least one of the transition orders of a set of one or more antenna points and the transition orders of one or more antenna groups. The information may be notified by higher layer signaling.

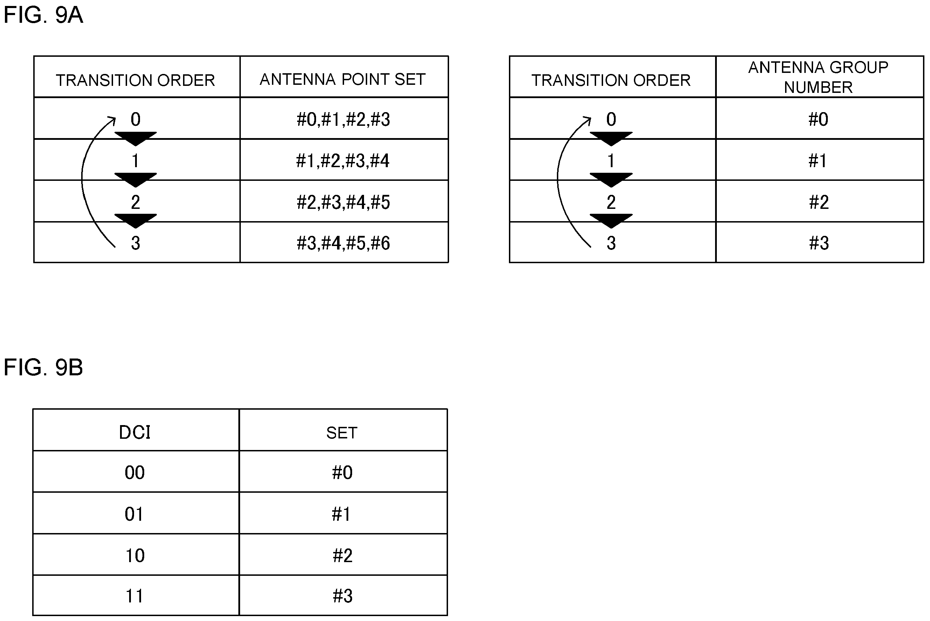

FIG. 9A is a diagram to show an example of information on the transition orders of a set of one or more antenna points and the transition orders of one or more antenna groups. The UE may control, based on the information, signal/channel transmission and reception to and from the antenna points and the antenna groups.

After having received a plurality of pieces of information as shown in FIG. 9A, the UE may be notified (indicated) of or may implicitly determine which information is to be used among the plurality of pieces of information by using at least one of MAC CE and DCI.

FIG. 9B is a diagram to show an example of information on the transition orders of a set of one or more antenna points and the transition orders of one or more antenna groups. The UE may receive information as shown in FIG. 9B by DCI and determine (judge) the transition orders of the set (table) of one or more antenna points and the transition orders of one or more antenna groups based on the information.

The UE may receive information on at least one of the transitions number of a set of one or more antenna points per unit time and the transitions number of one or more antenna groups per unit time. The information may be notified by higher layer signaling.

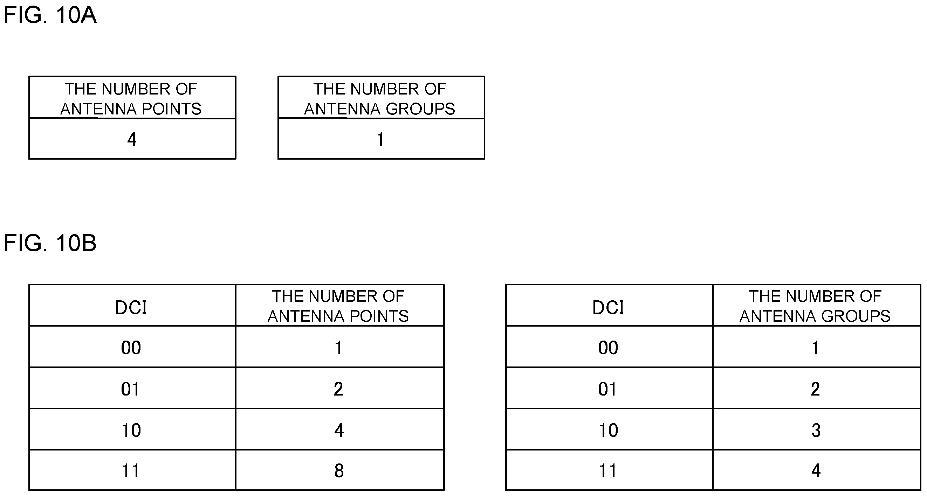

FIG. 10A is a diagram to show an example of information on the transition numbers of a set of one or more antenna points per unit time and the transition numbers of one or more antenna groups per unit time. The UE may control, based on the information, signal/channel transmission and reception to and from the antenna points and the antenna groups.

After having received a plurality of pieces of information as shown in FIG. 10A, the UE may be notified (indicated) of or may implicitly determine which information is to be used among the plurality of pieces of information by using at least one of MAC CE and DCI.

FIG. 10B is a diagram to show an example of information on the transition numbers of a set of one or more antenna points per unit time and the transition numbers of one or more antenna groups per unit time. The UE may receive information as shown in FIG. 10B by DCI and may determine (judge) the transition numbers of a set of one or more antenna points per unit time and the transition numbers of one or more antenna groups per unit time based on the information.

The UE may receive a plurality of pieces of information on at least one of the transition orders of a set of one or more antenna points and the transition orders of one or more antenna groups and may use the plurality of pieces of information in a switching manner based on the moving speed of the UE. Alternatively, the UE may receive a plurality of pieces of information on at least one of the transition numbers of a set of one or more antenna points per unit time and the transition numbers of one or more antenna groups per unit time and may use the plurality of pieces of information in a switching manner based on the moving speed of the UE. The plurality of pieces of information may be notified by higher layer signaling.

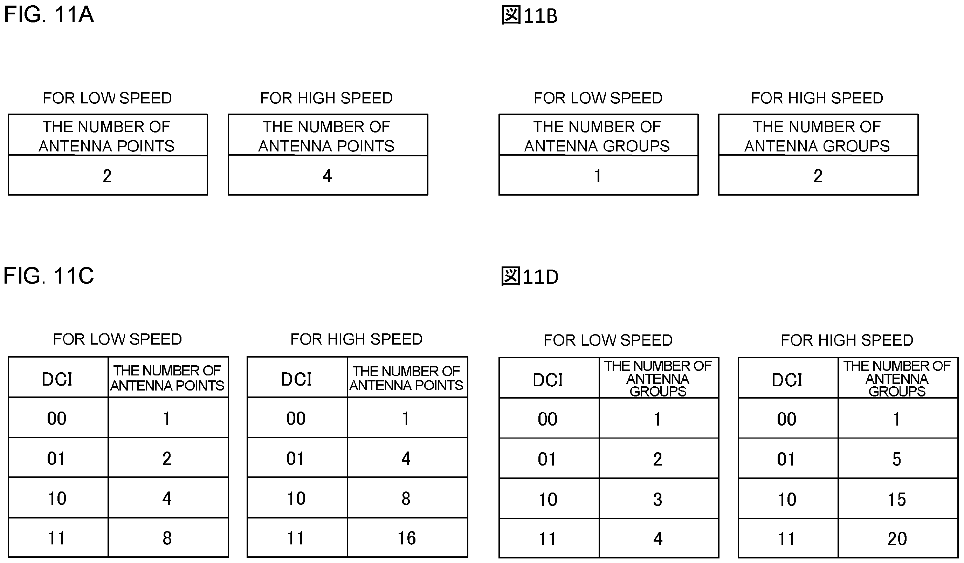

FIG. 11A is a diagram to show an example of information on the transition numbers of a set of one or more antenna points per unit time. The UE may select one piece of information among a plurality of pieces of information as shown in the example of FIG. 11B based on the moving speed of the UE and may control signal/channel transmission and reception to and from the antenna points and the antenna groups based on the one piece of information.

FIG. 11B is a diagram to show an example of information on the transition numbers of one or more antenna groups per unit time. The UE may select one piece of information among a plurality of pieces of information as shown in the example of FIG. 11B based on the moving speed of the UE and may control signal/channel transmission and reception to and from the antenna points and the antenna groups based on the one piece of information.

The UE may determine whether low speed or high speed is to be applied based on a threshold value. The threshold value may be defined by specifications in advance or may be notified to the UE by higher layer signaling. Note that although a case in which speed is divided into two, namely, low speed and high speed is described in the examples shown in FIGS. 11A and 11B, the number of speed divisions (or speed levels) may be equal to or larger than two.

After having received a plurality of pieces of information shown in FIGS. 11A and 11B, the UE may be notified (indicated) of or may implicitly determine which information is to be used among the plurality of pieces of information by using at least one of MAC CE and DCI.

FIG. 11C is a diagram to show an example of information on the transition numbers of a set of one or more antenna points per unit time. The UE may receive information as shown in FIG. 11C by the DCI and may determine (judge) the transition numbers of a set of one or more antenna points per unit time based on the information.

FIG. 11D is a diagram to show an example of information on the transition numbers of one or more antenna groups per unit time. The UE may receive information as shown in FIG. 11D by the DCI and may determine (judge) the transition number of one or more antenna groups per unit time based on the information.

Note that, in the present disclosure, "unit time" may be "transition unit time". In the present disclosure, the unit time may be an integral multiple of a time resource (for example, a symbol, a slot, a subslot, a subframe, or a radio frame) or may be T ms (T is an arbitrary value). In the present disclosure, the unit time may be defined by specifications in advance, may be notified to the UE by higher layer signaling, or may be a value reported the UE to a NW by UE capability information (UE Capability) signaling.

Note that the correspondence relation between an antenna point and an antenna group, the transition (change) order, and the transition (change) number per unit time, which are described in the present embodiment, are merely exemplary and not limited to the values and tables exemplarily described above. The UE may be explicitly notified of at least one of the transition (change) order and the transition number per unit time or may be notified of an index corresponding to each of the transition (change) order and the transition number per unit time.

According to the first embodiment, it is possible to appropriately dispose (redispose or configured) antenna points and antenna groups near a UE moving at high speed and perform preferable communication. Moreover, it is possible to configure antenna groups (antenna points) having the same cell ID near a UE moving at high speed, and thus it is possible to avoid handover and perform preferable communication even when a structural object extends for a long distance inside.

### <Second Embodiment>

The present embodiment will be described below with reference to a method of estimating the moving speed of a UE included in an HST.

The UE may determine (judge) the moving speed of the UE by measurement of a DL reference signal (RS). Alternatively, the UE may receive speed information through communication with the HST moving together with the UE.

Note that, in the present disclosure, the DL RS may be referred to as speed estimation RS, speed measurement RS, or the like. In the present disclosure, the speed estimation RS may be a RS of at least one of SSB, CSI-RS, TRS, and DMRS or may be a newly defined RS.

The UE may receive information on a speed estimation RS resource by at least one of higher layer signaling and broadcasting information.

The UE may measure the speed estimation RS resource at each of a plurality of transmission points and may estimate the speed of the UE through Doppler estimation. The UE may determine the speed of the UE based on a Doppler shift (f_{D}) obtained (computed) through the Doppler estimation. For example, when the Doppler shift is larger (or smaller) than a threshold value, the UE may determine that the moving speed of the UE is high speed. When the Doppler shift is smaller (or larger) than the threshold value, the UE may determine that the moving speed of the UE is low speed.

Note that the threshold value may be defined by specifications in advance or may be notified to the UE by higher layer signaling. Although the present embodiment describes a case in which speed is divided into two, namely, low speed and high speed, the number of speed divisions (or speed levels) may be equal to or larger than two.

Note that, in the present disclosure, the Doppler shift (fD) used to estimate the speed of the UE may be a measured value (instantaneous value) at one measured RS resource or may be the average value of measured values at a plurality of transmission points. The number of the plurality of transmission points may be defined by specifications in advance or may be notified to the UE by higher layer signaling.

Note that, in the present embodiment, each transmission point may be one or more antenna points or may be one or more antenna groups.

The Doppler shift obtained by the UE changes depending on the traveling direction of the moving object and the direction of a beam transmitted from each transmission point. In the present disclosure, the UE may receive information on the direction of a beam transmitted from each transmission point. The UE may receive the information by higher layer signaling. In this case, the UE may perform speed estimation (Doppler estimation) based on the received information.

Alternatively, the UE may receive no information on the direction of a beam transmitted from each transmission point. In this case, the UE may judge the direction of a beam transmitted from each transmission point based on a result of speed estimation (Doppler estimation).

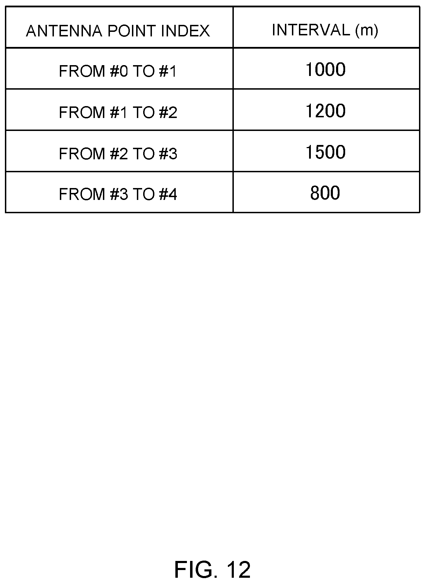

In the present disclosure, the UE may or may not receive information on the distance between each pair of a plurality of transmission points. The information on the distance between each pair of a plurality of transmission points may be information on the interval between the transmission points. The information on the interval between each pair of transmission points may include the physical interval between each pair of transmission points installed at equal intervals or may include the positional relation between the transmission points (refer to FIG. 12). In the present disclosure, the interval between each pair of transmission points may be constant or may vary. Note that values shown in FIG. 12 are merely exemplary, and the present disclosure is not limited to these values.

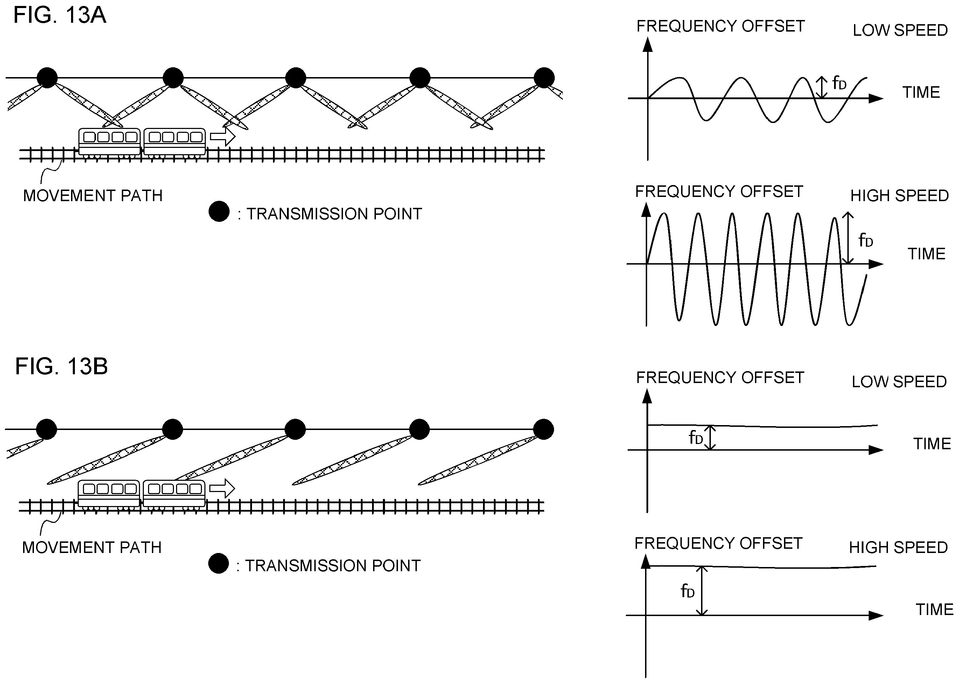

FIG. 13A is a diagram to show an exemplary method of estimation (Doppler estimation) of the moving speed of the UE included in the HST. FIG. 13A shows a case in which transmission points are installed along the movement path (moving direction, traveling direction, or traveling path) of the moving object, and beams are formed from each transmission point in both of the traveling direction of the moving object and the direction opposite to the traveling direction. A transmission point that forms beams in a plurality of directions (for example, two directions) may be referred to as a bi-directional transmission point.

As in the example shown in FIG. 13A, a result (the Doppler shift (f_{D})) obtained through Doppler estimation performed by the UE changes with the moving speed of the UE. The UE may estimate the speed of the UE by comparing the Doppler shift (fD) with a threshold value.

FIG. 13B is a diagram to show an exemplary method of estimation (Doppler estimation) of the moving speed of the UE included in the HST. FIG. 13B shows a case in which transmission points are installed along the movement path of the moving object and a beam is formed from each transmission point in the direction opposite to the traveling direction of the moving object. A transmission point that forms a beam in one direction may be referred to as a uni-directional transmission point.

In the example shown in FIG. 13B, the moving object receives a positive Doppler shift (+f_{D}) from each transmission point.

Note that a beam is formed in the direction opposite to the traveling direction of the moving object in this example, but the present disclosure is not limited thereto and a beam may be formed in the traveling direction. In this case, the moving object receives a negative Doppler shift (-f_{D}) each transmission point.

As in the example shown in FIG. 13B, a result (the Doppler shift (f_{D})) obtained through Doppler estimation performed by the UE changes with the moving speed of the UE. The UE may estimate the speed of the UE by comparing the Doppler shift (fD) with a threshold value.

The UE may estimate the speed of the UE by measuring the speed estimation RS resource at each of a plurality of transmission points and measuring received signal (RS) power. The UE may determine the speed of the UE based on the period of received signal power change obtained through the received signal power measurement. For example, when the period of received signal power change is shorter than a threshold value, the UE may determine that the moving speed of the UE is high speed. When the period of received signal power change is longer than the threshold value, the UE may determine that the moving speed of the UE is low speed. Note that the threshold value may be defined by specifications in advance or may be notified to the UE by higher layer signaling.

Note that, in the present disclosure, the received signal power may be interpreted as received power, reception quality, or the like. In the present disclosure, the received power may be, for example, reference signal received power (RSRP), a signal to interference plus noise ratio (SINR), or a signal to noise ratio (SNR). In the present disclosure, the reception quality may be, for example, reference signal received quality (RSRQ).

Note that, in the present disclosure, the period of received signal power change used to estimate the speed of the UE may be a measured value at one measured RS resource or may be the average value of measured values at a plurality of transmission points. The number of the plurality of transmission points may be defined by specifications in advance or may be notified to the UE by higher layer signaling.

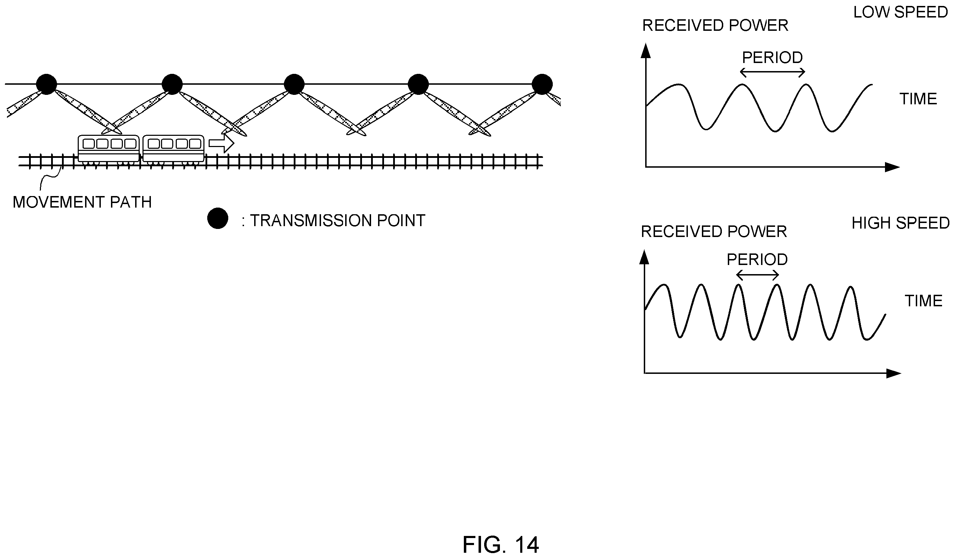

FIG. 14 is a diagram to show an exemplary method (received signal power measurement) of estimating the moving speed of the UE included in the HST. FIG. 14 shows a case in which transmission points are installed along the movement path of the moving object and beams are formed from each transmission point in both of the traveling direction of the moving object and the direction opposite to the traveling direction.

Note that, in the present disclosure, the UE may receive information on the direction of a beam transmitted from each transmission point. The UE may receive the information by higher layer signaling. In this case, the UE may perform speed estimation (received signal power measurement) based on the received information.

Alternatively, the UE may receive no information on the direction of a beam transmitted from each transmission point. In this case, the UE may judge the direction of a beam transmitted from each transmission point based on a result of speed estimation (received signal power measurement).

As in the example shown in FIG. 14, a result (the period of received signal power change) obtained through received signal power measurement performed by the UE changes with the moving speed of the UE. The UE may estimate the speed of the UE by comparing the period of received signal power change with a threshold value.

Note that the above-described speed estimation method utilizing Doppler estimation and the above-described speed estimation method utilizing received signal power measurement may be used independently or may be used in combination. When the methods are used in combination, the moving speed of the UE can be estimated at higher accuracy. Note that the UE may be or may not be notified of whether to apply at least one of the speed estimation method utilizing Doppler estimation and the speed estimation method utilizing received signal power measurement.

While the UE does not estimate the moving speed of the UE, a NW may estimate the moving speed of the UE and transmit speed information of the UE to the UE.

In this case, the NW may configure transmission of an UL signal/channel to the UE and estimate an moving speed of the UE by receiving the UL signal/channel transmitted from the UE. Alternatively, the NW may install either or both of a plurality of sensors (for example, HST/UE position estimation sensors) and a plurality of reception points in a structural object (cell, area) and may estimate the moving speed of the UE based on position information of the UE. Alternatively, the NW may receive speed information of the UE through communication with the HST moving together with the UE. Then, the UE may receive the speed information of the UE from the NW.

Note that the plurality of sensors and the plurality of reception points may be common to the above-described transmission points (antenna points or antenna groups) or may be, for example, independent sensors or antenna points (antenna groups) different from the transmission points.

The UE may measure a DL signal/channel transmitted from each transmission point and may report a result of the measurement to the NW. For example, the UE may perform Doppler estimation in measurement of the DL signal/channel and report at least one of the Doppler shift (fD) and the period of Doppler shift change (for example, at least one of the duration (period) from +f_{D} to +f_{D}, the duration (period) from -f_{D} to -f_{D}, the duration (period) from +f_{D} to -f_{D}, and the duration (period) from -f_{D} to +f_{D}) in the Doppler estimation.

For example, the UE may measure received signal power in measurement of the DL signal/channel and may report at least one of the maximum value, the minimum value, the difference between the maximum value and the minimum value, the duration (period) of change from the maximum value to the minimum value, the duration (period) of change from the minimum value to the maximum value, the duration (period) of change from the maximum value to the maximum value, and the duration (period) of change from the minimum value to the minimum value in the measurement of received signal power.

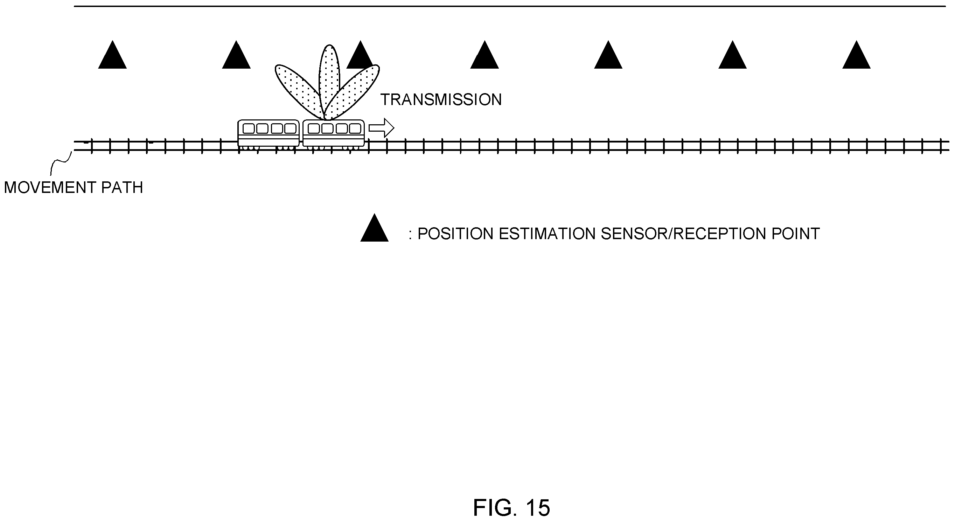

FIG. 15 is a diagram to show an exemplary method by which the NW estimates the moving speed of the UE. As shown in FIG. 15, a plurality of HST/UE position estimation sensors are installed inside the structural object, and the UE transmits an UL signal/channel or a measurement result (at least one of a Doppler estimation result or a received power measurement result) to the plurality of sensors. The NW estimates the moving speed of the UE based on the information received from the UE and transmits speed information to the UE.

As described above, according to the second embodiment, it is possible to appropriately estimate the moving speed of a UE moving at high speed.

### <Third Embodiment>

The present embodiment will be described below with reference to QCL configuration along with transition of antenna points/antenna groups disposed on the movement path. Note that the QCL as used herein may be replaced with at least one of the TCI state, the DL TCI state, the UL TCI state, the unified TCI state, the spatial relation, the QCL relation, the QCL assumption, and the QCL type.

When antenna points/antenna groups transition with time, a UE may assume that the QCL is same through the transition. Note that, in the present disclosure, "the QCL or the like is same" may be mutually interpreted as "the QCL or the like is held", "the QCL or the like is maintained", "the QCL or the like is valid", and so on.

For example, when antenna points/antenna groups transition with time, the UE may assume that the QCL is same in an optional duration including a time before the transition (for example, time to) and a time after the transition (for example, time t₁).

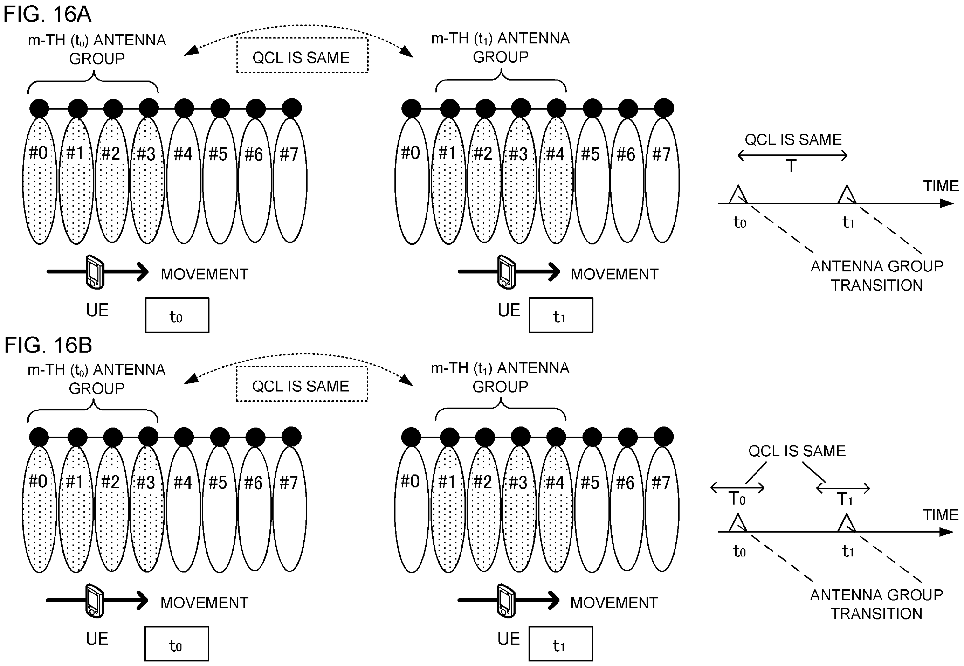

FIG. 16A is a diagram to show an example of QCL configuration along with transition of antenna points/antenna groups. When an antenna group transitions from time to to time t₁ as in the example shown in FIG. 16A, the UE may assume that the QCL is same in an optional duration (T) including a time before the transition (time to) and a time after the transition (time t₁).

For example, when antenna points/antenna groups transition with time, the UE may assume that the QCL is same in a duration including a time before the transition (for example, time to) and a duration including a time after the transition (for example, time t₁).

FIG. 16B is a diagram to show an example of QCL configuration along with antenna points/antenna groups transition. As in the example shown in FIG. 16B, when an antenna group transitions from time to to time t₁, the UE may assume that the QCL is same in a duration (To) including a time before the transition (time to) and a duration (T₁) including a time after the transition (time t₁).

When antenna points/antenna groups transition with time, the UE may assume that the QCL is different through the transition. Note that, in the present disclosure, "the QCL or the like is different" may be mutually interpreted as "the QCL or the like is not held", "the QCL or the like is not maintained", "the QCL or the like is invalid", and so on.

For example, when antenna points/antenna groups transition with time, the UE may assume that the QCL at a time before the transition (for example, time to) is maintained in an optional duration until a time after the transition (for example, time t₁).

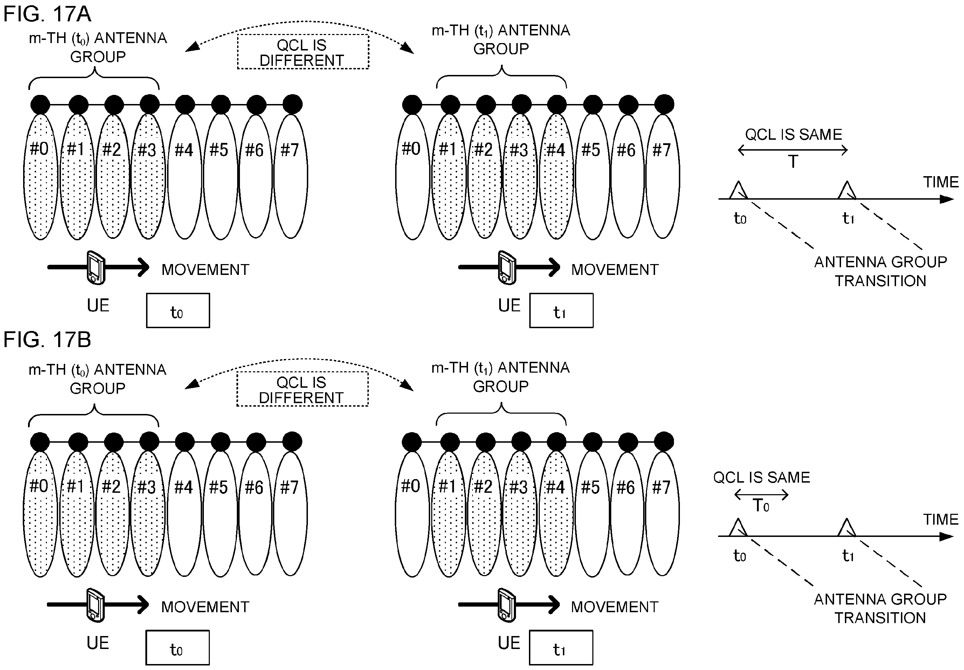

FIG. 17A is a diagram to show an example of QCL configuration along with antenna points/antenna groups transition. As in the example shown in FIG. 17A, when an antenna group transitions from time to to time t₁, the UE may assume that the QCL at a time before the transition (time to) is same in an optional duration (T) until a time after the transition (time t₁).

For example, when antenna points/antenna groups transition with time, the UE may assume that the QCL is same in a duration from a time before the transition (for example, time to). In other words, when antenna points/antenna groups transition with time, the UE may assume that the QCL is same in a duration after the transition at time t₀. Note that, in the present disclosure, "in a duration after the transition at time to" may be interpreted as "in a duration after measurement (reception) of the DL RS".

FIG. 17B is a diagram to show an example of QCL configuration along with antenna points/antenna groups transition. As in the example shown in FIG. 17B, when an antenna group transitions from time to to time t₁, the UE may assume that the QCL is same in a duration (T₀) after a time before the transition (time t₀).

The UE may assume that the QCL configured to each antenna point (and at least one of an antenna group, a channel, and a RS) temporally transitions.

For example, the UE may assume that the measured value of a signal/channel measured at a time before the transition (time to) is valid until a time (for example, time to + k) and invalid after a time (for example, time to + k).

Note that, in the present disclosure, "the measured value of a signal/channel is valid" may be mutually interpreted as the measured value of a signal/channel can be used", "the measured value of a signal/channel can be assumed", and so on. In the present disclosure, "the measured value of a signal/channel is invalid" may be mutually interpreted as "the measured value of a signal/channel cannot be used", "the measured value of a signal/channel cannot be assumed", and so on.

For example, the UE may assume that the measured value of a signal/channel, which is configured (notified) at a time before the transition (time t₀) is valid until a time (for example, time t₀ + k) and invalid after a time (for example, time t₀ + k).

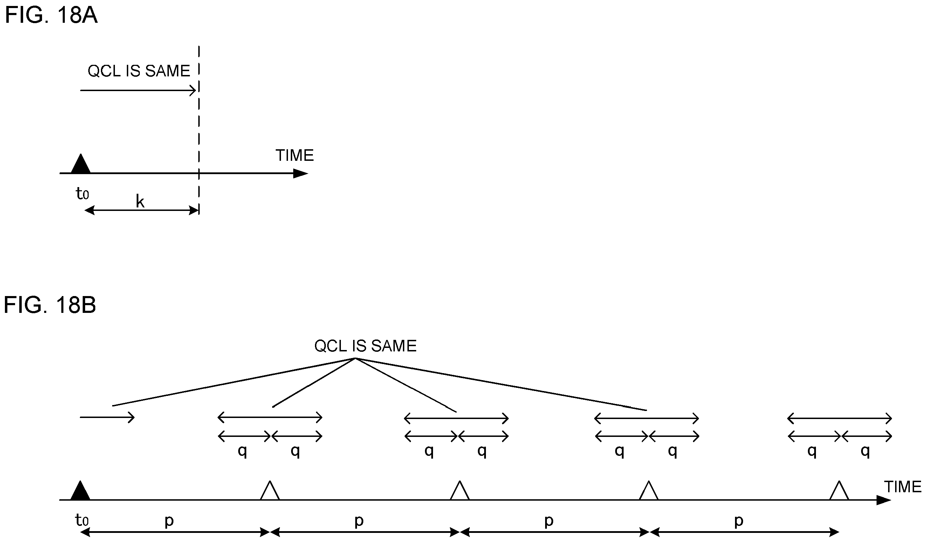

FIG. 18A is a diagram to show an example of QCL configuration along with transition of antenna points/antenna groups. In the example shown in FIG. 18A, the UE controls signal/channel transmission and reception based on an assumption that the measured value of a signal/channel measured (configured (notified)) at time t₀ is valid until time t₀ + k and invalid after time t₀ + k.

The UE may assume that the QCL configured to each antenna point (and at least one of an antenna group, a channel, and a RS) temporally transitions and is valid in a duration. In other words, the UE may assume that the QCL configured to each antenna point (and at least one of an antenna group, a channel, and a RS) is same at periodic times.

For example, the UE may assume that the measured value of a signal/channel measured at a time before the transition (time to) is valid at a time (for example, time t₀ + p, t₀ + 2p, t₀ + 3p, ..., t₀ + np (n is an optional integer)) and invalid at a time other than the time (for example, time t₀ + p, t₀ + 2p, t₀ + 3p, ..., t₀ + np (n is an optional integer)). The UE passing through the vicinity of each antenna group at a substantially constant speed receives the same signal/channel at substantially constant intervals, and thus such a case is desirably applied.

For example, the UE may assume that the measured value of a signal/channel measured at a time before the transition (time to) is valid at a time (for example, time t₀ + p, t₀ + 2p, t₀ + 3p, ..., t₀ + np (n is an optional integer)) and in the duration of the time ±q and invalid at a time other than the time (for example, time t₀ + p, t₀ + 2p, t₀ + 3p, ..., t₀ + np (n is an optional integer)) and the duration of the time ±q.

For example, the UE may assume that the measured value of a signal/channel, which is configured (notified) at a time before the transition (time t₀) is valid at a time (for example, time t₀ + p, t₀ + 2p, t₀ + 3p, ..., t₀ + np (n is an optional integer)) and invalid at a time other than the time (for example, time t₀ + k).

For example, the UE may assume that the measured value of a signal/channel, which is configured (notified) at a time before the transition (time t₀) is valid at a time (for example, time t₀ + p, t₀ + 2p, t₀ + 3p, ..., t₀ + np (n is an optional integer)) and in the duration of the time ±q and invalid at a time other than the time (for example, time t₀ + p, t₀ + 2p, t₀ + 3p, ..., t₀ + np (n is an optional integer)) and the duration of the time ±q.

FIG. 18B is a diagram to show an example of QCL configuration along with transition of antenna points/antenna groups. In the example shown in FIG. 18B, the UE controls signal/channel transmission and reception based on an assumption that the measured value of a signal/channel measured (configured (notified)) at time t₀ is valid at time t₀ + p, t₀ + 2p, t₀ + 3p, ..., t₀ + np (n is an optional integer) and in the duration of the time ±q and invalid at a time other than the time t₀ + p, t₀ + 2p, t₀ + 3p, ..., t₀ + np (n is an optional integer) and the duration of the time ±q.

Note that, in the present embodiment, a value (for example, at least one of T, T₀, T₁, k, p, and q) in a duration may be notified to the UE by higher layer signaling, physical layer signaling, or combination thereof. Alternatively, the value in a duration may be defined by specifications in advance. Alternatively, the value in a duration may be determined based on a frequency range (FR) and subcarrier spacing (SCS). Alternatively, the value in a duration may be an integral multiple of a time resource (for example, a symbol, a slot, a subslot, a subframe, or a radio frame) or may be t ms (t is an arbitrary value). Alternatively, the value in a duration may be determined based on a value reported from the UE to a NW by UE capability information (UE Capability) signaling.

According to the present embodiment, it is possible to appropriately perform QCL configuration to the UE along with transition of antenna points/antenna groups and achieve preferable communication.

### <Fourth Embodiment>

The present embodiment will be described below with reference to configuration of a cell ID and a signal/channel sequence hopping pattern to an antenna group along with transition of antenna points/antenna groups disposed on the movement path.

Note that, in the present disclosure, the cell ID may be mutually interpreted as a sequence ID, a virtual cell ID, and so on. In the present disclosure, the signal/channel sequence hopping pattern may be an UL signal/channel sequence hopping pattern or a DL signal/channel. In the present disclosure, a signal/channel sequence may be mutually interpreted as a DMRS sequence, a DL RS that determines a parameter (for example, an initial value) for generating a data scrambling sequence, a DL RS that determines a parameter (for example, an initial value) for generating a PN sequence, and so on.

Note that the present embodiment will be mainly described with reference to an example in which the correspondence between an antenna point and an antenna group transitions for each antenna point at each elapse of a certain transition unit time, but the number of antenna points (antenna groups) that transition at each elapse of a certain transition unit time is not limited to one.

When antenna points/antenna groups transition with time, the UE may assume that the correspondence (association) between an antenna group and a cell ID transitions for each antenna group. When antenna points/antenna groups transition with time, the UE may assume that the correspondence (association) between an antenna point and a cell ID transitions for each antenna point.

In this case, a UE may assume that the correspondence (association) between an antenna group/antenna point and a cell ID temporally transitions (changes). In addition, in this case, the UE may assume that the spatial positions of (a set of) antenna groups/antenna points corresponding to a cell ID temporally transition (change).

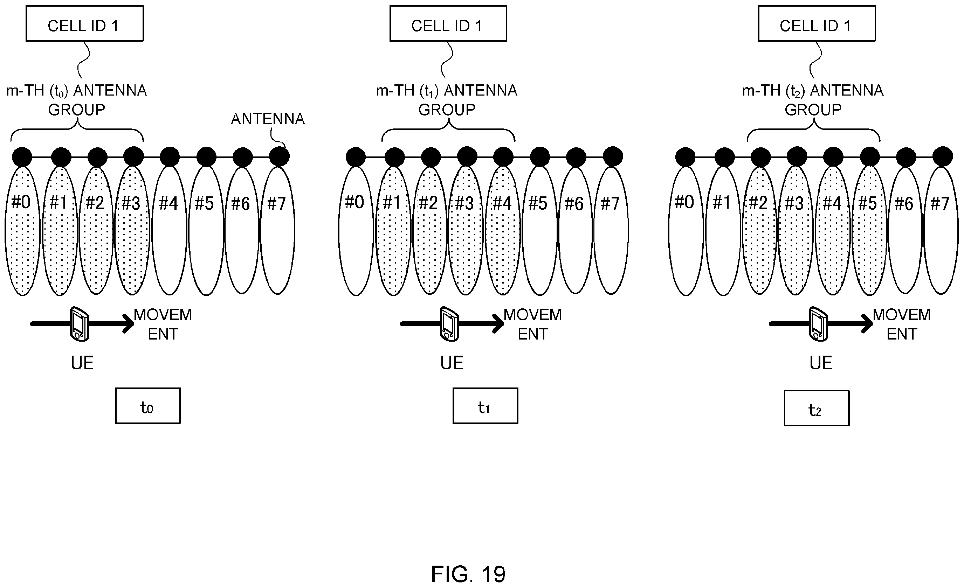

FIG. 19 is a diagram to show an example of the correspondence between an antenna group and a cell ID when antenna points/antenna groups transition with time. Antenna points #0 to #3 correspond to the m-th (t₀) antenna group at time t₀, antenna points #1 to #4 correspond to the m-th (t₁) antenna group at time t₁, and antenna points #2 to #5 correspond to the m-th (t₂) antenna group at time t₂. In this case, the UE controls signal/channel transmission and reception based on an assumption that cell ID 1 corresponds to (is associated with) the m-th (t₀) antenna group, the m-th (t₁) antenna group, and the m-th (t₂) antenna group at respective times.

When antenna points/antenna groups transition with time, the UE may assume that the correspondence (association) between an antenna group and a sequence hopping pattern transitions for each antenna group. When antenna points/antenna groups transition with time, the UE may assume that the correspondence (association) between an antenna point and a sequence hopping pattern transitions for each antenna point.

In this case, the UE may assume that the correspondence (association) between an antenna group/antenna point and a sequence hopping pattern temporally transitions (changes). In addition, in this case, the UE may assume that the spatial positions of (a set of) antenna groups/antenna points corresponding to a sequence hopping pattern temporally transition (change).

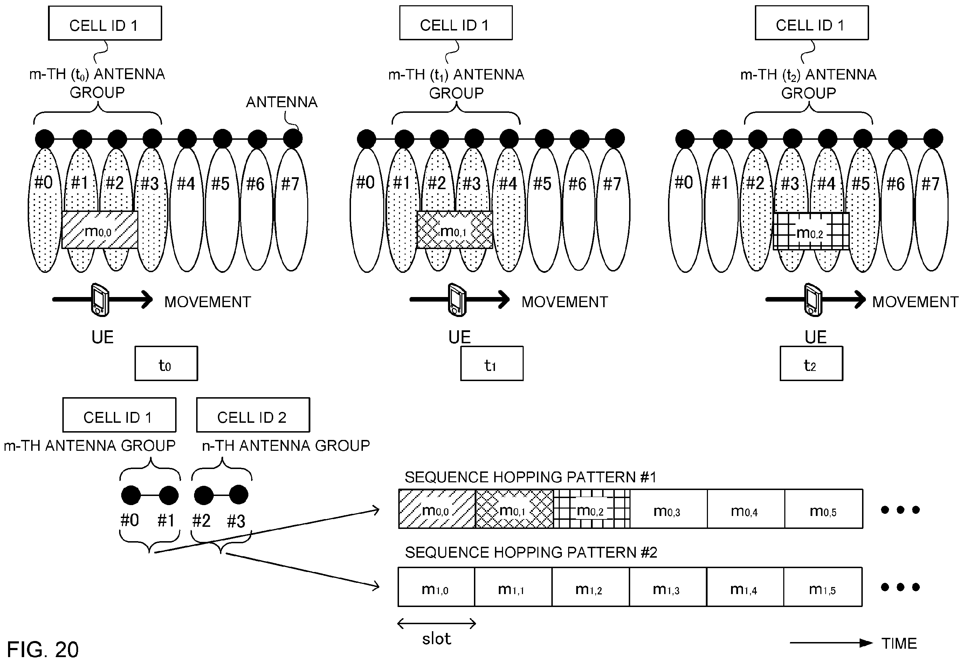

FIG. 20 is a diagram to show an example of the correspondence between an antenna group and a sequence hopping pattern when antenna points/antenna groups transition with time. The correspondence between an antenna group and an antenna point at a time is same as that in FIG. 19. A sequence hopping pattern is determined for each cell ID, sequence hopping is performed for each time (for example, at least one of a symbol, a slot, and a subslot). In this case, the UE controls signal/channel transmission and reception based on an assumption that the m-th (t₀) antenna group corresponds to sequence m_{0,0} at time t₀, the m-th (t₁) antenna group corresponds to sequence m_{0,1} at time t₁, and the m-th (t₂) antenna group corresponds to sequence m_{0,2} at time t₂.

Note that m_{X,Y} (X and Y are optional integers) in the present embodiment may be a sequence number (index), a cyclic shift (CS) number (index), an orthogonal cover code (OCC) number (index), or the like.

Note that, in the present disclosure, an antenna point may be referred to as a virtual antenna point, a virtual antenna port, a quasi-antenna point, a quasi-antenna port, a virtual RS point, a virtual RS port, a quasi RS point, a quasi RS port, or the like.

Note that the UE may assume that a quasi-antenna point/port (may be referred to as a virtual antenna point/port) is constituted by antenna points/ports actually used for MIMO transmission. A virtual antenna point/port may include only antenna points/ports in an antenna group or may include antenna points/ports in a plurality of antenna groups. Note that virtual antenna points/ports for multi-antenna transmission may constitute a virtual antenna group.

The UE and a NW may associate an antenna port with each antenna point in an antenna group. Note that the network may notify the UE of information on antenna points/ports actually used for MIMO transmission, by using higher layer signaling, physical layer signaling, or combination thereof.

Note that a virtual antenna point/port may correspond to an antenna point/port activated based on higher layer signaling, physical layer signaling, or combination thereof.

Antenna points (or virtual antenna points) in an antenna group (or virtual antenna group) may transmit the same data or may each independently perform signal processing and transmit resulting data.

The UE may assume that there is no one-to-one correspondence between an antenna group/antenna point and a cell ID. In other words, the UE may assume that the correspondence between a cell ID and an antenna group temporally transitions (changes). The UE may judge that the correspondence between a cell ID and an antenna group temporally transitions (changes) based on information on transition of antenna groups/antenna points and cell IDs.

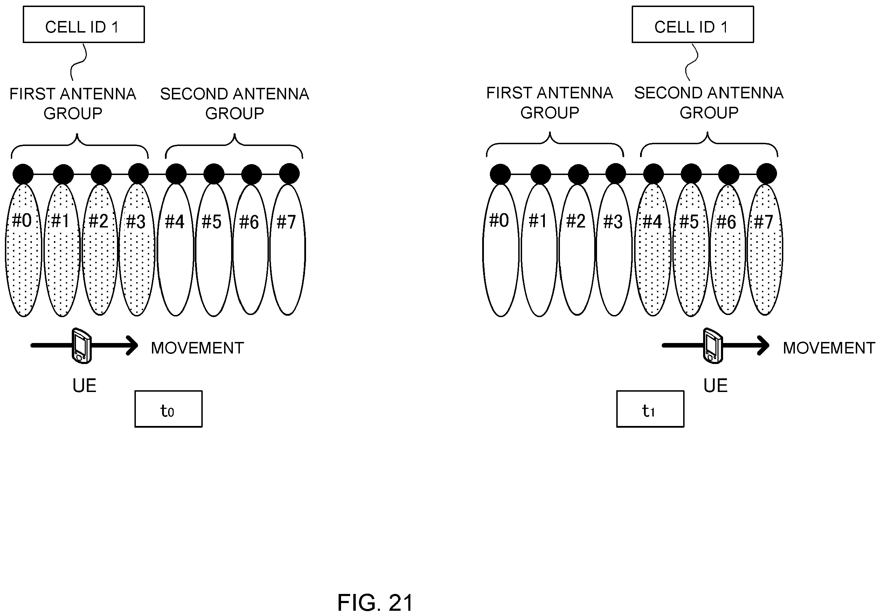

FIG. 21 is a diagram to show an example of the correspondence between an antenna group and a cell ID when antenna points/antenna groups transition with time. At each of time to and time t₁, antenna points #0 to #3 correspond to a first antenna group, and antenna points #4 to #7 correspond to a second antenna group. In this case, a cell ID transitions from the first antenna group to the second antenna group from time t₀ to time t₁.

Note that the information on transition of antenna groups/antenna points and cell IDs may be explicitly notified (configured) to the UE by higher layer signaling, physical layer signaling, or combination thereof. The information on transition of antenna groups/antenna points and cell IDs may be explicitly notified (configured) to the UE by higher layer signaling, or a plurality of pieces of the information may be configured (activated) to the UE by higher layer signaling (for example, RRC signaling or MAC CE) and selection from the plurality of configured configuration may be performed by physical layer signaling (for example, the DCI).

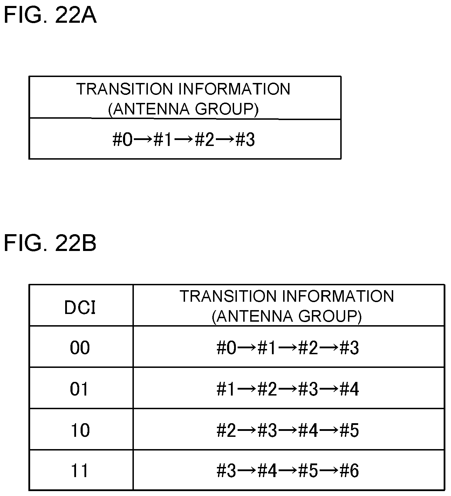

FIG. 22A is a diagram to show an example of information on transition of antenna groups and cell IDs. The information shown in the example of FIG. 22A indicates how an antenna group corresponding to a cell ID transitions in each transition unit time. The UE is notified of the information shown in the example of FIG. 22A by higher layer signaling and controls signal/channel transmission and reception based on the information.

FIG. 22B is a diagram to show an example of information on transition of antenna groups and cell IDs. The information shown in the example of FIG. 22B indicates how an antenna group corresponding to a cell ID transitions in each transition unit time. The UE is notified of information including a plurality of transition candidates, which is shown in the example of FIG. 22B, by higher layer signaling, and then the UE selects one candidate based on the information as well as a field value (in this example, 2-bit) of the DCI received by the UE and controls signal/channel transmission and reception.

The UE may implicitly determine transition of antenna groups and cell IDs based on information notified (configured) to the UE by broadcasting information, higher layer signaling, physical layer signaling, or combination thereof.

For example, transition of antenna groups and cell IDs may be implicitly determined by the UE based on the DCI (or the PDCCH on which the DCI is transmitted). A physical resource for the DCI may be at least one of a time resource, a frequency resource, a control channel element (CCE) index, a search space index, a control resource set (CORESET) index, and an aggregation level of the DCI. For example, the UE may assume that a value related to transition of antenna groups and cell IDs and indicated by the NW is the remainder of division of the CCE index (or the value of the aggregation level) by a certain integer.

For example, the UE may assume that the QCL of a data schedule in the DCI is determined based on association among antenna points, antenna ports, and antenna groups in the DCI. For example, the UE may assume that the QCL of a data schedule in the DCI is equal to association among antenna points, antenna ports, and antenna groups in the DCI. For example, the UE may assume that the QCL of a data schedule in the DCI is different from association among antenna points, antenna ports, and antenna groups in the DCI.

For example, the UE may assume that the QCL of a data schedule in the DCI is determined based on the QCL (TCI state) in the DCI (or the PDCCH on which the DCI is transmitted).

The UE may assume that at least one set among a set of antenna points, a set of antenna ports, a set of antenna groups, a set of cells, and a set of cell IDs transitions independently for each of DL and UL. In other words, the UE may use, for DL signal/channel reception, at least one set among a set of DL antenna points, a set of DL antenna ports, a set of DL antenna groups, a set of DL cells, and a set of DL cell IDs, and may use, for UL signal/channel transmission, at least one set among a set of UL antenna points, a set of UL antenna ports, a set of UL antenna groups, a set of UL cells, and a set of UL cell IDs. In this case, at least one of DL/UL beam (space domain filter), QCL, TPC (Transmission Power Control), and resource allocation may correspond (may be determined) for each cell ID.

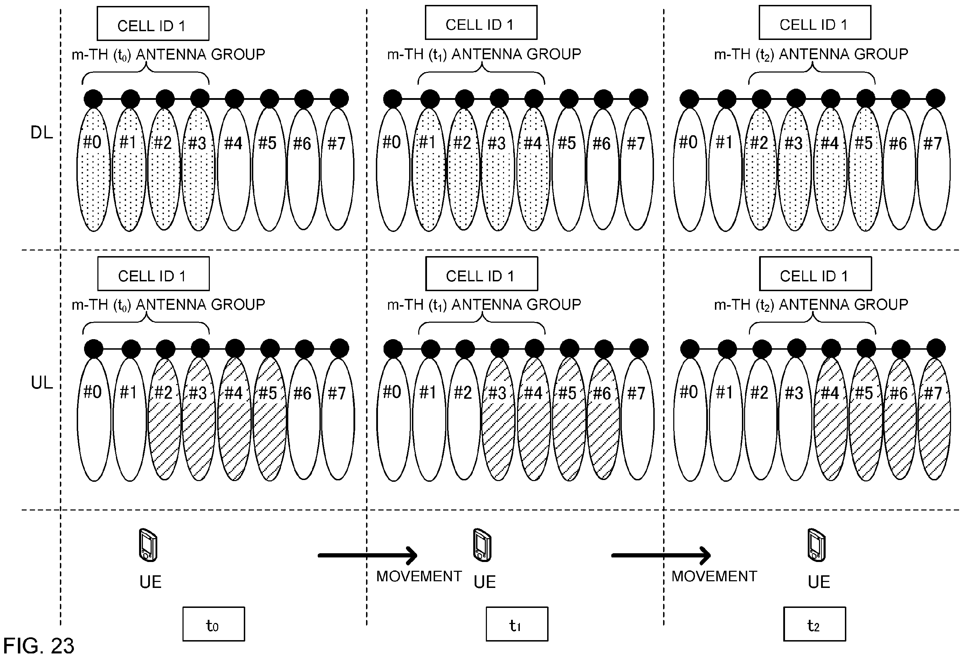

FIG. 23 is a diagram to show an example of the correspondence between an antenna group and a cell ID when antenna points/antenna groups transition with time. For DL, antenna points #0 to #3 correspond to the m-th (t₀) antenna group at time t₀, antenna points #1 to #4 correspond to the m-th (t₁) antenna group at time t₁, and antenna points #2 to #5 correspond to the m-th (t₂) antenna group at time t₂. For UL, antenna points #2 to #5 correspond to the m-th (t₀) antenna group at time t₀, antenna points #3 to #6 correspond to the m-th (t₁) antenna group at time t₁, and antenna points #4 to #7 correspond to the m-th (t₂) antenna group at time t₂.

In this case, as time elapses, an antenna group and the cell ID corresponding to the antenna group transition in DL and UL. Specifically, the m-th antenna group at each time corresponds to cell ID 1 for DL, and the m-th antenna group at each time corresponds to cell ID 2 for UL. The UE controls DL signal/channel reception and UL signal/channel transmission based on the above-described correspondence.

Note that, in the present embodiment, correspondence (association) between a cell ID and at least one of an antenna point, an antenna port, and an antenna group may be or may not be one-to-one correspondence.

According to the present embodiment, a UE moving at high speed can be allowed to communicate with a NW by using an appropriate cell by appropriately disposing/redisposing a cell ID near the UE. Moreover, a plurality of cells can be allocated to each of a plurality of UEs inside a long-distance tunnel, and further preferable communication can be performed. Furthermore, a long-distance SFN can be established in a tunnel without handover.

### <Variations>

A UE included in a HST may assume that antenna groups/antenna points physically (mechanically) move near the UE to follow movement of the UE.

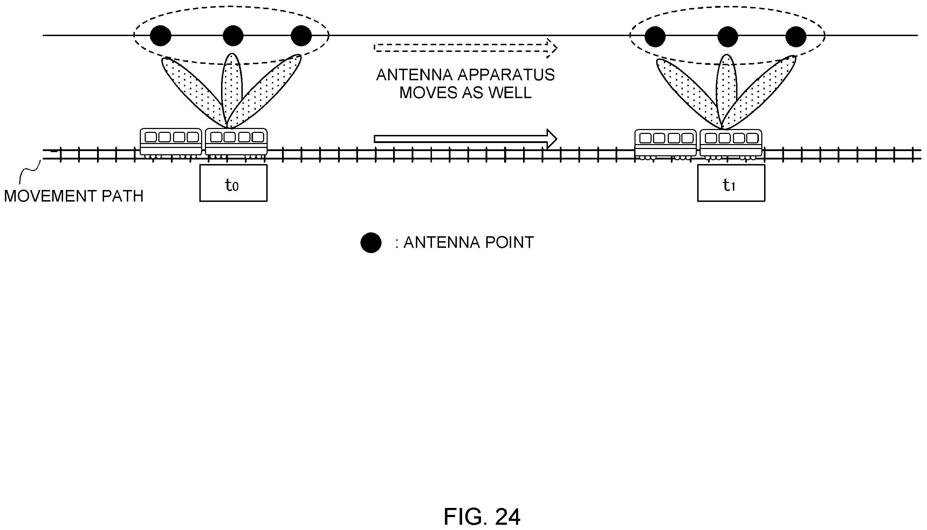

FIG. 24 is a diagram to show an example of an antenna group that follows movement of a UE included in an HST. In the example shown in FIG. 24, a movable antenna group installed inside a structural object follows in accordance with the moving direction of the UE included in the HST. With this method, the UE can excellently perform communication in a tunnel without handover.

### (Radio Communication System)

Hereinafter, a structure of a radio communication system according to one embodiment of the present disclosure will be described. In this radio communication system, the radio communication method according to each embodiment of the present disclosure described above may be used alone or may be used in combination for communication.

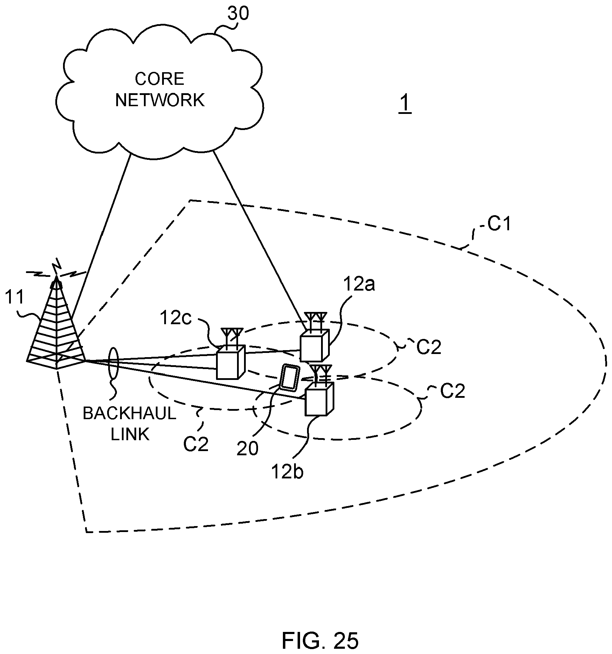

FIG. 25 is a diagram to show an example of a schematic structure of the radio communication system according to one embodiment. The radio communication system 1 may be a system implementing a communication using Long Term Evolution (LTE), 5th generation mobile communication system New Radio (5G NR) and so on the specifications of which have been drafted by Third Generation Partnership Project (3GPP).

The radio communication system 1 may support dual connectivity (multi-RAT dual connectivity (MR-DC)) between a plurality of Radio Access Technologies (RATs). The MR-DC may include dual connectivity (E-UTRA-NR Dual Connectivity (EN-DC)) between LTE (Evolved Universal Terrestrial Radio Access (E-UTRA)) and NR, dual connectivity (NR-E-UTRA Dual Connectivity (NE-DC)) between NR and LTE, and so on.

In EN-DC, a base station (eNB) of LTE (E-UTRA) is a master node (MN), and a base station (gNB) of NR is a secondary node (SN). In NE-DC, a base station (gNB) of NR is an MN, and a base station (eNB) of LTE (E-UTRA) is an SN.

The radio communication system 1 may support dual connectivity between a plurality of base stations in the same RAT (for example, dual connectivity (NR-NR Dual Connectivity (NN-DC)) where both of an MN and an SN are base stations (gNB) of NR).

The radio communication system 1 may include a base station 11 that forms a macro cell C1 of a relatively wide coverage, and base stations 12 (12a to 12c) that form small cells C2, which are placed within the macro cell C1 and which are narrower than the macro cell C1. The user terminal 20 may be located in at least one cell. The arrangement, the number, and the like of each cell and user terminal 20 are by no means limited to the aspect shown in the diagram. Hereinafter, the base stations 11 and 12 will be collectively referred to as "base stations 10," unless specified otherwise.

The user terminal 20 may be connected to at least one of the plurality of base stations 10. The user terminal 20 may use at least one of carrier aggregation (CA) and dual connectivity (DC) using a plurality of component carriers (CCs).

Each CC may be included in at least one of a first frequency band (Frequency Range 1 (FR1)) and a second frequency band (Frequency Range 2 (FR2)). The macro cell C1 may be included in FR1, and the small cells C2 may be included in FR2. For example, FR1 may be a frequency band of 6GHz or less (sub-6GHz), and FR2 may be a frequency band which is higher than 24GHz (above-24GHz). Note that frequency bands, definitions and so on of FR1 and FR2 are by no means limited to these, and for example, FR1 may correspond to a frequency band which is higher than FR2.

The user terminal 20 may communicate using at least one of time division duplex (TDD) and frequency division duplex (FDD) in each CC.

The plurality of base stations 10 may be connected by a wired connection (for example, optical fiber in compliance with the Common Public Radio Interface (CPRI), the X2 interface and so on) or a wireless connection (for example, an NR communication). For example, if an NR communication is used as a backhaul between the base stations 11 and 12, the base station 11 corresponding to a higher station may be referred to as an "Integrated Access Backhaul (IAB) donor," and the base station 12 corresponding to a relay station (relay) may be referred to as an "IAB node."

The base station 10 may be connected to a core network 30 through another base station 10 or directly. For example, the core network 30 may include at least one of Evolved Packet Core (EPC), 5G Core Network (5GCN), Next Generation Core (NGC), and so on.

The user terminal 20 may be a terminal supporting at least one of communication schemes such as LTE, LTE-A, 5G, and so on.

In the radio communication system 1, an orthogonal frequency division multiplexing (OFDM)-based wireless access scheme may be used. For example, in at least one of the downlink (DL) and the uplink (UL), Cyclic Prefix OFDM (CP-OFDM), Discrete Fourier Transform Spread OFDM (DFT-s-OFDM), Orthogonal Frequency Division Multiple Access (OFDMA), Single Carrier Frequency Division Multiple Access (SC-FDMA), and so on may be used.

The wireless access scheme may be referred to as a "waveform." Note that, in the radio communication system 1, another wireless access scheme (for example, another single carrier transmission scheme, another multi-carrier transmission scheme) may be used for a wireless access scheme in the UL and the DL.

In the radio communication system 1, a downlink shared channel (Physical Downlink Shared Channel (PDSCH)), which is used by each user terminal 20 on a shared basis, a broadcast channel (Physical Broadcast Channel (PBCH)), a downlink control channel (Physical Downlink Control Channel (PDCCH)) and so on, may be used as downlink channels.

In the radio communication system 1, an uplink shared channel (Physical Uplink Shared Channel (PUSCH)), which is used by each user terminal 20 on a shared basis, an uplink control channel (Physical Uplink Control Channel (PUCCH)), a random access channel (Physical Random Access Channel (PRACH)) and so on may be used as uplink channels.

User data, higher layer control information, System Information Blocks (SIBs) and so on are communicated on the PDSCH. User data, higher layer control information and so on may be communicated on the PUSCH. The Master Information Blocks (MIBs) may be communicated on the PBCH.

Lower layer control information may be communicated on the PDCCH. For example, the lower layer control information may include downlink control information (DCI) including scheduling information of at least one of the PDSCH and the PUSCH.

Note that DCI for scheduling the PDSCH may be referred to as "DL assignment," "DL DCI," and so on, and DCI for scheduling the PUSCH may be referred to as "UL grant," "UL DCI," and so on. Note that the PDSCH may be interpreted as "DL data", and the PUSCH may be interpreted as "UL data".

For detection of the PDCCH, a control resource set (CORESET) and a search space may be used. The CORESET corresponds to a resource to search DCI. The search space corresponds to a search area and a search method of PDCCH candidates. One CORESET may be associated with one or more search spaces. The UE may monitor a CORESET associated with a certain search space, based on search space configuration.

One search space may correspond to a PDCCH candidate corresponding to one or more aggregation levels. One or more search spaces may be referred to as a "search space set." Note that a "search space," a "search space set," a "search space configuration," a "search space set configuration," a "CORESET," a "CORESET configuration" and so on of the present disclosure may be interchangeably interpreted.

Uplink control information (UCI) including at least one of channel state information (CSI), transmission confirmation information (for example, which may be also referred to as Hybrid Automatic Repeat reQuest ACKnowledgement (HARQ-ACK), ACK/NACK, and so on), and scheduling request (SR) may be communicated by means of the PUCCH. By means of the PRACH, random access preambles for establishing connections with cells may be communicated.

Note that the downlink, the uplink, and so on in the present disclosure may be expressed without a term of "link." In addition, various channels may be expressed without adding "Physical" to the head.

In the radio communication system 1, a synchronization signal (SS), a downlink reference signal (DL-RS), and so on may be communicated. In the radio communication system 1, a cell-specific reference signal (CRS), a channel state information-reference signal (CSI-RS), a demodulation reference signal (DMRS), a positioning reference signal (PRS), a phase tracking reference signal (PTRS), and so on may be communicated as the DL-RS.

For example, the synchronization signal may be at least one of a primary synchronization signal (PSS) and a secondary synchronization signal (SSS). A signal block including an SS (PSS, SSS) and a PBCH (and a DMRS for a PBCH) may be referred to as an "SS/PBCH block," an "SS Block (SSB)," and so on. Note that an SS, an SSB, and so on may be also referred to as a "reference signal."

In the radio communication system 1, a sounding reference signal (SRS), a demodulation reference signal (DMRS), and so on may be communicated as an uplink reference signal (UL-RS). Note that DMRS may be referred to as a "user terminal specific reference signal (UE-specific Reference Signal)."

### (Base Station)

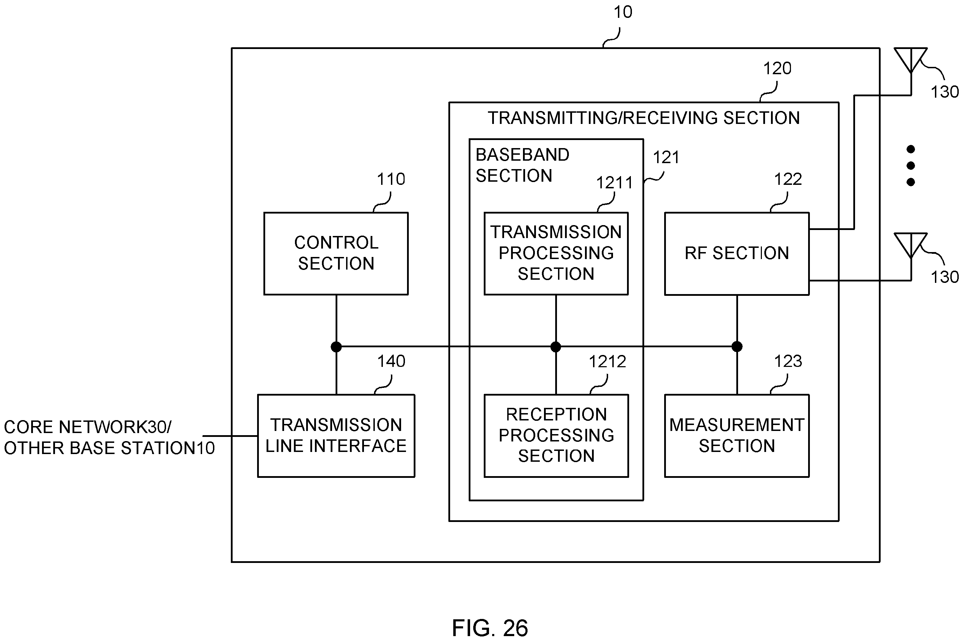

FIG. 26 is a diagram to show an example of a structure of the base station according to one embodiment. The base station 10 includes a control section 110, a transmitting/receiving section 120, transmitting/receiving antennas 130 and a communication path interface (transmission line interface) 140. Note that the base station 10 may include one or more control sections 110, one or more transmitting/receiving sections 120, one or more transmitting/receiving antennas 130, and one or more communication path interfaces 140.

Note that, the present example primarily shows functional blocks that pertain to characteristic parts of the present embodiment, and it is assumed that the base station 10 may include other functional blocks that are necessary for radio communication as well. Part of the processes of each section described below may be omitted.

The control section 110 controls the whole of the base station 10. The control section 110 can be constituted with a controller, a control circuit, or the like described based on general understanding of the technical field to which the present disclosure pertains.

The control section 110 may control generation of signals, scheduling (for example, resource allocation, mapping), and so on. The control section 110 may control transmission and reception, measurement and so on using the transmitting/receiving section 120, the transmitting/receiving antennas 130, and the communication path interface 140. The control section 110 may generate data, control information, a sequence and so on to transmit as a signal, and forward the generated items to the transmitting/receiving section 120. The control section 110 may perform call processing (setting up, releasing) for communication channels, manage the state of the base station 10, and manage the radio resources.

The transmitting/receiving section 120 may include a baseband section 121, a Radio Frequency (RF) section 122, and a measurement section 123. The baseband section 121 may include a transmission processing section 1211 and a reception processing section 1212. The transmitting/receiving section 120 can be constituted with a transmitter/receiver, an RF circuit, a baseband circuit, a filter, a phase shifter, a measurement circuit, a transmitting/receiving circuit, or the like described based on general understanding of the technical field to which the present disclosure pertains.

The transmitting/receiving section 120 may be structured as a transmitting/receiving section in one entity, or may be constituted with a transmitting section and a receiving section. The transmitting section may be constituted with the transmission processing section 1211, and the RF section 122. The receiving section may be constituted with the reception processing section 1212, the RF section 122, and the measurement section 123.

The transmitting/receiving antennas 130 can be constituted with antennas, for example, an array antenna, or the like described based on general understanding of the technical field to which the present disclosure pertains.

The transmitting/receiving section 120 may transmit the above-described downlink channel, synchronization signal, downlink reference signal, and so on. The transmitting/receiving section 120 may receive the above-described uplink channel, uplink reference signal, and so on.

The transmitting/receiving section 120 may form at least one of a transmission beam and a reception beam by using digital beam foaming (for example, precoding), analog beam foaming (for example, phase rotation), and so on.

The transmitting/receiving section 120 (transmission processing section 1211) may perform the processing of the Packet Data Convergence Protocol (PDCP) layer, the processing of the Radio Link Control (RLC) layer (for example, RLC retransmission control), the processing of the Medium Access Control (MAC) layer (for example, HARQ retransmission control), and so on, for example, on data and control information and so on acquired from the control section 110, and may generate bit string to transmit.

The transmitting/receiving section 120 (transmission processing section 1211) may perform transmission processing such as channel coding (which may include error correction coding), modulation, mapping, filtering, discrete Fourier transform (DFT) processing (as necessary), inverse fast Fourier transform (IFFT) processing, precoding, digital-to-analog conversion, and so on, on the bit string to transmit, and output a baseband signal.

The transmitting/receiving section 120 (RF section 122) may perform modulation to a radio frequency band, filtering, amplification, and so on, on the baseband signal, and transmit the signal of the radio frequency band through the transmitting/receiving antennas 130.

On the other hand, the transmitting/receiving section 120 (RF section 122) may perform amplification, filtering, demodulation to a baseband signal, and so on, on the signal of the radio frequency band received by the transmitting/receiving antennas 130.

The transmitting/receiving section 120 (reception processing section 1212) may apply reception processing such as analog-digital conversion, fast Fourier transform (FFT) processing, inverse discrete Fourier transform (IDFT) processing (as necessary), filtering, demapping, demodulation, decoding (which may include error correction decoding), MAC layer processing, the processing of the RLC layer and the processing of the PDCP layer, and so on, on the acquired baseband signal, and acquire user data, and so on.

The transmitting/receiving section 120 (measurement section 123) may perform the measurement related to the received signal. For example, the measurement section 123 may perform Radio Resource Management (RRM) measurement, Channel State Information (CSI) measurement, and so on, based on the received signal. The measurement section 123 may measure a received power (for example, Reference Signal Received Power (RSRP)), a received quality (for example, Reference Signal Received Quality (RSRQ), a Signal to Interference plus Noise Ratio (SINR), a Signal to Noise Ratio (SNR)), a signal strength (for example, Received Signal Strength Indicator (RSSI)), channel information (for example, CSI), and so on. The measurement results may be output to the control section 110.

The communication path interface 140 may perform transmission/reception (backhaul signaling) of a signal with an apparatus included in the core network 30 or other base stations 10, and so on, and acquire or transmit user data (user plane data), control plane data, and so on for the user terminal 20.

Note that the transmitting section and the receiving section of the base station 10 in the present disclosure may be constituted with at least one of the transmitting/receiving section 120, the transmitting/receiving antennas 130, and the communication path interface 140.

The transmitting/receiving section 120 may transmit information on change of the correspondence relation between one or more antenna points disposed on a movement path and one or more antenna groups including the one or more antenna points. The control section 110 may control transmission of at least one of a downlink channel and a reference signal based on the information. The control section 110 may control reception of at least one of an uplink channel and a reference signal based on the information (the first, third, and fourth embodiments).

The transmitting/receiving section 120 may transmit a downlink reference signal (DL RS) from one or more antenna points disposed on a movement path. The transmitting/receiving section 120 may receive a measurement result of at least one of the period of received power change of the resource of the DL RS and the Doppler shift of the resource of the DL RS (the second embodiment).

### (User Terminal)

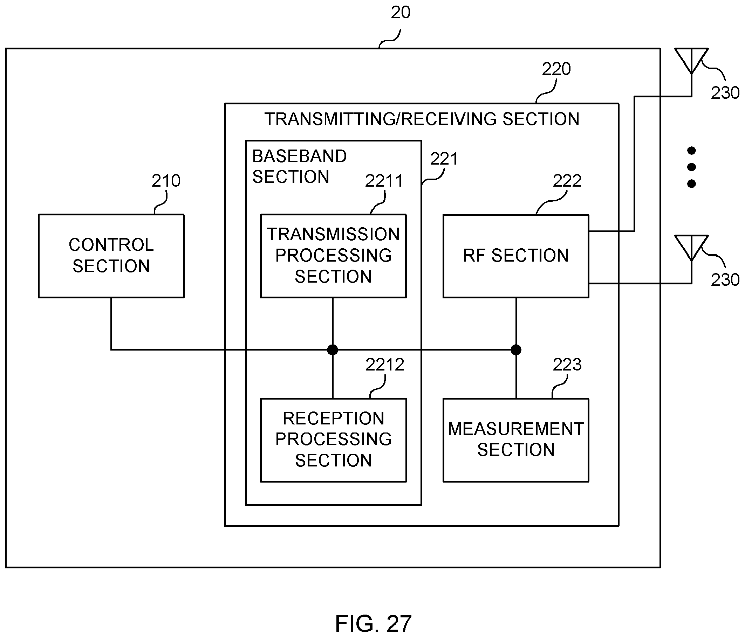

FIG. 27 is a diagram to show an example of a structure of the user terminal according to one embodiment. The user terminal 20 includes a control section 210, a transmitting/receiving section 220, and transmitting/receiving antennas 230. Note that the user terminal 20 may include one or more control sections 210, one or more transmitting/receiving sections 220, and one or more transmitting/receiving antennas 230.

Note that, the present example primarily shows functional blocks that pertain to characteristic parts of the present embodiment, and it is assumed that the user terminal 20 may include other functional blocks that are necessary for radio communication as well. Part of the processes of each section described below may be omitted.

The control section 210 controls the whole of the user terminal 20. The control section 210 can be constituted with a controller, a control circuit, or the like described based on general understanding of the technical field to which the present disclosure pertains.

The control section 210 may control generation of signals, mapping, and so on. The control section 210 may control transmission/reception, measurement and so on using the transmitting/receiving section 220, and the transmitting/receiving antennas 230. The control section 210 generates data, control information, a sequence and so on to transmit as a signal, and may forward the generated items to the transmitting/receiving section 220.

The transmitting/receiving section 220 may include a baseband section 221, an RF section 222, and a measurement section 223. The baseband section 221 may include a transmission processing section 2211 and a reception processing section 2212. The transmitting/receiving section 220 can be constituted with a transmitter/receiver, an RF circuit, a baseband circuit, a filter, a phase shifter, a measurement circuit, a transmitting/receiving circuit, or the like described based on general understanding of the technical field to which the present disclosure pertains.

The transmitting/receiving section 220 may be structured as a transmitting/receiving section in one entity, or may be constituted with a transmitting section and a receiving section. The transmitting section may be constituted with the transmission processing section 2211, and the RF section 222. The receiving section may be constituted with the reception processing section 2212, the RF section 222, and the measurement section 223.

The transmitting/receiving antennas 230 can be constituted with antennas, for example, an array antenna, or the like described based on general understanding of the technical field to which the present disclosure pertains.

The transmitting/receiving section 220 may receive the above-described downlink channel, synchronization signal, downlink reference signal, and so on. The transmitting/receiving section 220 may transmit the above-described uplink channel, uplink reference signal, and so on.

The transmitting/receiving section 220 may form at least one of a transmission beam and a reception beam by using digital beam foaming (for example, precoding), analog beam foaming (for example, phase rotation), and so on.

The transmitting/receiving section 220 (transmission processing section 2211) may perform the processing of the PDCP layer, the processing of the RLC layer (for example, RLC retransmission control), the processing of the MAC layer (for example, HARQ retransmission control), and so on, for example, on data and control information and so on acquired from the control section 210, and may generate bit string to transmit.

The transmitting/receiving section 220 (transmission processing section 2211) may perform transmission processing such as channel coding (which may include error correction coding), modulation, mapping, filtering, DFT processing (as necessary), IFFT processing, precoding, digital-to-analog conversion, and so on, on the bit string to transmit, and output a baseband signal.

Note that, whether to apply DFT processing or not may be based on the configuration of the transform precoding. The transmitting/receiving section 220 (transmission processing section 2211) may perform, for a certain channel (for example, PUSCH), the DFT processing as the above-described transmission processing to transmit the channel by using a DFT-s-OFDM waveform if transform precoding is enabled, and otherwise, does not need to perform the DFT processing as the above-described transmission process.

The transmitting/receiving section 220 (RF section 222) may perform modulation to a radio frequency band, filtering, amplification, and so on, on the baseband signal, and transmit the signal of the radio frequency band through the transmitting/receiving antennas 230.

On the other hand, the transmitting/receiving section 220 (RF section 222) may perform amplification, filtering, demodulation to a baseband signal, and so on, on the signal of the radio frequency band received by the transmitting/receiving antennas 230.

The transmitting/receiving section 220 (reception processing section 2212) may apply a receiving process such as analog-digital conversion, FFT processing, IDFT processing (as necessary), filtering, de-mapping, demodulation, decoding (which may include error correction decoding), MAC layer processing, the processing of the RLC layer and the processing of the PDCP layer, and so on, on the acquired baseband signal, and acquire user data, and so on.

The transmitting/receiving section 220 (measurement section 223) may perform the measurement related to the received signal. For example, the measurement section 223 may perform RRM measurement, CSI measurement, and so on, based on the received signal. The measurement section 223 may measure a received power (for example, RSRP), a received quality (for example, RSRQ, SINR, SNR), a signal strength (for example, RSSI), channel information (for example, CSI), and so on. The measurement results may be output to the control section 210.

Note that the transmitting section and the receiving section of the user terminal 20 in the present disclosure may be constituted with at least one of the transmitting/receiving section 220 and the transmitting/receiving antennas 230.

The transmitting/receiving section 220 may receive information on change of the correspondence relation between one or more antenna points disposed on a movement path and one or more antenna groups including the one or more antenna points. The control section 210 may control reception of at least one of a downlink channel and a reference signal based on the information. The control section 210 may control transmission of at least one of an uplink channel and a reference signal based on the information (the first, third, and fourth embodiments).

The information may include at least one of an order of change of each antenna group, the number of changes in the antenna group, a moving speed, quasi-co-location (QCL) corresponding to the antenna group, and a cell ID applied to the antenna group (the first, third, and fourth embodiments).

The control section 210 may judge (determine), based on the information, a duration in which QCL applied to at least one of a downlink channel and a reference signal is identical (the third embodiment).

The control section 210 may judge (determine) that a cell ID applied to the one or more antenna groups is identical (the fourth embodiment).

The transmitting/receiving section 220 may receive a downlink reference signal (DL RS) from each of one or more antenna points disposed on a movement path. The control section 210 may measure at least one of the period of received power change of the resource of the DL RS and the Doppler shift of the resource of the DL RS (the second embodiment).

The transmitting/receiving section 220 may receive information that indicates measurement of at least one of the period of received power change and the Doppler shift (the second embodiment).

The transmitting/receiving section 220 may receive information on the distance between each pair of the antenna points (the second embodiment).

The control section 210 may control report of at least one of the period of received power change and the Doppler shift. The transmitting/receiving section 220 may receive information on the moving speed from the network (the second embodiment).

### (Hardware Structure)

Note that the block diagrams that have been used to describe the above embodiments show blocks in functional units. These functional blocks (components) may be implemented in arbitrary combinations of at least one of hardware and software. Also, the method for implementing each functional block is not particularly limited. That is, each functional block may be realized by one piece of apparatus that is physically or logically coupled, or may be realized by directly or indirectly connecting two or more physically or logically separate pieces of apparatus (for example, via wire, wireless, or the like) and using these plurality of pieces of apparatus. The functional blocks may be implemented by combining softwares into the apparatus described above or the plurality of apparatuses described above.

Here, functions include judgment, determination, decision, calculation, computation, processing, derivation, investigation, search, confirmation, reception, transmission, output, access, resolution, selection, designation, establishment, comparison, assumption, expectation, considering, broadcasting, notifying, communicating, forwarding, configuring, reconfiguring, allocating (mapping), assigning, and the like, but function are by no means limited to these. For example, functional block (components) to implement a function of transmission may be referred to as a "transmitting section (transmitting unit)," a "transmitter," and the like. The method for implementing each component is not particularly limited as described above.

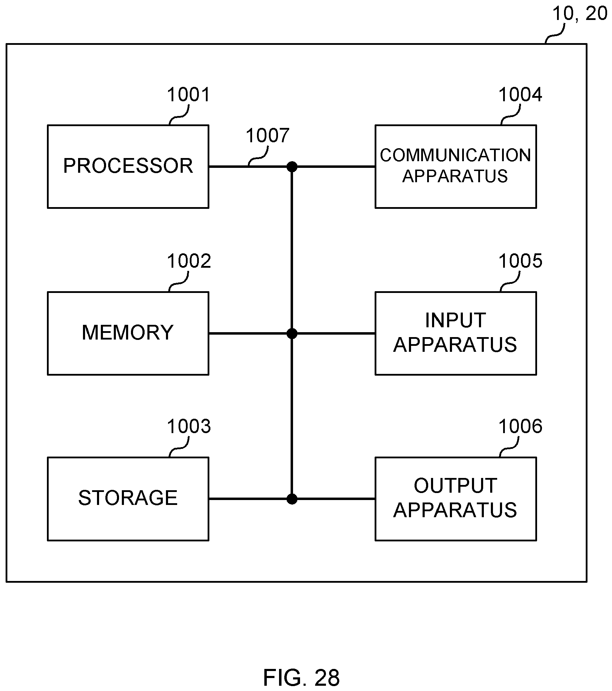

For example, a base station, a user terminal, and so on according to one embodiment of the present disclosure may function as a computer that executes the processes of the radio communication method of the present disclosure. FIG. 28 is a diagram to show an example of a hardware structure of the base station and the user terminal according to one embodiment. Physically, the above-described base station 10 and user terminal 20 may each be formed as a computer apparatus that includes a processor 1001, a memory 1002, a storage 1003, a communication apparatus 1004, an input apparatus 1005, an output apparatus 1006, a bus 1007, and so on.

Note that in the present disclosure, the words such as an apparatus, a circuit, a device, a section, a unit, and so on can be interchangeably interpreted. The hardware structure of the base station 10 and the user terminal 20 may be configured to include one or more of apparatuses shown in the drawings, or may be configured not to include part of apparatuses.

For example, although only one processor 1001 is shown, a plurality of processors may be provided. Furthermore, processes may be implemented with one processor or may be implemented at the same time, in sequence, or in different manners with two or more processors. Note that the processor 1001 may be implemented with one or more chips.

Each function of the base station 10 and the user terminals 20 is implemented, for example, by allowing certain software (programs) to be read on hardware such as the processor 1001 and the memory 1002, and by allowing the processor 1001 to perform calculations to control communication via the communication apparatus 1004 and control at least one of reading and writing of data in the memory 1002 and the storage 1003.

The processor 1001 controls the whole computer by, for example, running an operating system. The processor 1001 may be configured with a central processing unit (CPU), which includes interfaces with peripheral apparatus, control apparatus, computing apparatus, a register, and so on. For example, at least part of the above-described control section 110 (210), the transmitting/receiving section 120 (220), and so on may be implemented by the processor 1001.

Furthermore, the processor 1001 reads programs (program codes), software modules, data, and so on from at least one of the storage 1003 and the communication apparatus 1004, into the memory 1002, and executes various processes according to these. As for the programs, programs to allow computers to execute at least part of the operations of the above-described embodiments are used. For example, the control section 110 (210) may be implemented by control programs that are stored in the memory 1002 and that operate on the processor 1001, and other functional blocks may be implemented likewise.

The memory 1002 is a computer-readable recording medium, and may be constituted with, for example, at least one of a Read Only Memory (ROM), an Erasable Programmable ROM (EPROM), an Electrically EPROM (EEPROM), a Random Access Memory (RAM), and other appropriate storage media. The memory 1002 may be referred to as a "register," a "cache," a "main memory (primary storage apparatus)" and so on. The memory 1002 can store executable programs (program codes), software modules, and the like for implementing the radio communication method according to one embodiment of the present disclosure.

The storage 1003 is a computer-readable recording medium, and may be constituted with, for example, at least one of a flexible disk, a floppy (registered trademark) disk, a magneto-optical disk (for example, a compact disc (Compact Disc ROM (CD-ROM) and so on), a digital versatile disc, a Blu-ray (registered trademark) disk), a removable disk, a hard disk drive, a smart card, a flash memory device (for example, a card, a stick, and a key drive), a magnetic stripe, a database, a server, and other appropriate storage media. The storage 1003 may be referred to as "secondary storage apparatus."

The communication apparatus 1004 is hardware (transmitting/receiving device) for allowing inter-computer communication via at least one of wired and wireless networks, and may be referred to as, for example, a "network device," a "network controller," a "network card," a "communication module," and so on. The communication apparatus 1004 may be configured to include a high frequency switch, a duplexer, a filter, a frequency synthesizer, and so on in order to realize, for example, at least one of frequency division duplex (FDD) and time division duplex (TDD). For example, the above-described transmitting/receiving section 120 (220), the transmitting/receiving antennas 130 (230), and so on may be implemented by the communication apparatus 1004. In the transmitting/receiving section 120 (220), the transmitting section 120a (220a) and the receiving section 120b (220b) can be implemented while being separated physically or logically.

The input apparatus 1005 is an input device that receives input from the outside (for example, a keyboard, a mouse, a microphone, a switch, a button, a sensor, and so on). The output apparatus 1006 is an output device that allows sending output to the outside (for example, a display, a speaker, a Light Emitting Diode (LED) lamp, and so on). Note that the input apparatus 1005 and the output apparatus 1006 may be provided in an integrated structure (for example, a touch panel).

Furthermore, these types of apparatus, including the processor 1001, the memory 1002, and others, are connected by a bus 1007 for communicating information. The bus 1007 may be formed with a single bus, or may be formed with buses that vary between pieces of apparatus.

Also, the base station 10 and the user terminals 20 may be structured to include hardware such as a microprocessor, a digital signal processor (DSP), an Application Specific Integrated Circuit (ASIC), a Programmable Logic Device (PLD), a Field Programmable Gate Array (FPGA), and so on, and part or all of the functional blocks may be implemented by the hardware. For example, the processor 1001 may be implemented with at least one of these pieces of hardware.

### (Variations)

Note that the terminology described in the present disclosure and the terminology that is needed to understand the present disclosure may be replaced by other terms that convey the same or similar meanings. For example, a "channel," a "symbol," and a "signal" (or signaling) may be interchangeably interpreted. Also, "signals" may be "messages." A reference signal may be abbreviated as an "RS," and may be referred to as a "pilot," a "pilot signal," and so on, depending on which standard applies. Furthermore, a "component carrier (CC)" may be referred to as a "cell," a "frequency carrier," a "carrier frequency" and so on.

A radio frame may be constituted of one or a plurality of periods (frames) in the time domain. Each of one or a plurality of periods (frames) constituting a radio frame may be referred to as a "subframe." Furthermore, a subframe may be constituted of one or a plurality of slots in the time domain. A subframe may be a fixed time length (for example, 1 ms) independent of numerology.

Here, numerology may be a communication parameter applied to at least one of transmission and reception of a certain signal or channel. For example, numerology may indicate at least one of a subcarrier spacing (SCS), a bandwidth, a symbol length, a cyclic prefix length, a transmission time interval (TTI), the number of symbols per TTI, a radio frame structure, a particular filter processing performed by a transceiver in the frequency domain, a particular windowing processing performed by a transceiver in the time domain, and so on.

A slot may be constituted of one or a plurality of symbols in the time domain (Orthogonal Frequency Division Multiplexing (OFDM) symbols, Single Carrier Frequency Division Multiple Access (SC-FDMA) symbols, and so on). Furthermore, a slot may be a time unit based on numerology.

A slot may include a plurality of mini-slots. Each mini-slot may be constituted of one or a plurality of symbols in the time domain. A mini-slot may be referred to as a "sub-slot." A mini-slot may be constituted of symbols less than the number of slots. A PDSCH (or PUSCH) transmitted in a time unit larger than a mini-slot may be referred to as "PDSCH (PUSCH) mapping type A." A PDSCH (or PUSCH) transmitted using a mini-slot may be referred to as "PDSCH (PUSCH) mapping type B."

A radio frame, a subframe, a slot, a mini-slot, and a symbol all express time units in signal communication. A radio frame, a subframe, a slot, a mini-slot, and a symbol may each be called by other applicable terms. Note that time units such as a frame, a subframe, a slot, mini-slot, and a symbol in the present disclosure may be interchangeably interpreted.

For example, one subframe may be referred to as a "TTI," a plurality of consecutive subframes may be referred to as a "TTI," or one slot or one mini-slot may be referred to as a "TTI." That is, at least one of a subframe and a TTI may be a subframe (1 ms) in existing LTE, may be a shorter period than 1 ms (for example, 1 to 13 symbols), or may be a longer period than 1 ms. Note that a unit expressing TTI may be referred to as a "slot," a "mini-slot," and so on instead of a "subframe."

Here, a TTI refers to the minimum time unit of scheduling in radio communication, for example. For example, in LTE systems, a base station schedules the allocation of radio resources (such as a frequency bandwidth and transmit power that are available for each user terminal) for the user terminal in TTI units. Note that the definition of TTIs is not limited to this.

TTIs may be transmission time units for channel-encoded data packets (transport blocks), code blocks, or codewords, or may be the unit of processing in scheduling, link adaptation, and so on. Note that, when TTIs are given, the time interval (for example, the number of symbols) to which transport blocks, code blocks, codewords, or the like are actually mapped may be shorter than the TTIs.

Note that, in the case where one slot or one mini-slot is referred to as a TTI, one or more TTIs (that is, one or more slots or one or more mini-slots) may be the minimum time unit of scheduling. Furthermore, the number of slots (the number of mini-slots) constituting the minimum time unit of the scheduling may be controlled.

A TTI having a time length of 1 ms may be referred to as a "normal TTI" (TTI in 3GPP Rel. 8 to Rel. 12), a "long TTI," a "normal subframe," a "long subframe," a "slot" and so on. A TTI that is shorter than a normal TTI may be referred to as a "shortened TTI," a "short TTI," a "partial or fractional TTI," a "shortened subframe," a "short subframe," a "mini-slot," a "sub-slot," a "slot" and so on.

Note that a long TTI (for example, a normal TTI, a subframe, and so on) may be interpreted as a TTI having a time length exceeding 1 ms, and a short TTI (for example, a shortened TTI and so on) may be interpreted as a TTI having a TTI length shorter than the TTI length of a long TTI and equal to or longer than 1 ms.

A resource block (RB) is the unit of resource allocation in the time domain and the frequency domain, and may include one or a plurality of consecutive subcarriers in the frequency domain. The number of subcarriers included in an RB may be the same regardless of numerology, and, for example, may be 12. The number of subcarriers included in an RB may be determined based on numerology.

Also, an RB may include one or a plurality of symbols in the time domain, and may be one slot, one mini-slot, one subframe, or one TTI in length. One TTI, one subframe, and so on each may be constituted of one or a plurality of resource blocks.

Note that one or a plurality of RBs may be referred to as a "physical resource block (Physical RB (PRB))," a "sub-carrier group (SCG)," a "resource element group (REG),"a "PRB pair," an "RB pair" and so on.

Furthermore, a resource block may be constituted of one or a plurality of resource elements (REs). For example, one RE may correspond to a radio resource field of one subcarrier and one symbol.

A bandwidth part (BWP) (which may be referred to as a "fractional bandwidth," and so on) may represent a subset of contiguous common resource blocks (common RBs) for certain numerology in a certain carrier. Here, a common RB may be specified by an index of the RB based on the common reference point of the carrier. A PRB may be defined by a certain BWP and may be numbered in the BWP.

The BWP may include a UL BWP (BWP for the UL) and a DL BWP (BWP for the DL). One or a plurality of BWPs may be configured in one carrier for a UE.

At least one of configured BWPs may be active, and a UE does not need to assume to transmit/receive a certain signal/channel outside active BWPs. Note that a "cell," a "carrier," and so on in the present disclosure may be interpreted as a "BWP".

Note that the above-described structures of radio frames, subframes, slots, mini-slots, symbols, and so on are merely examples. For example, structures such as the number of subframes included in a radio frame, the number of slots per subframe or radio frame, the number of mini-slots included in a slot, the numbers of symbols and RBs included in a slot or a mini-slot, the number of subcarriers included in an RB, the number of symbols in a TTI, the symbol length, the cyclic prefix (CP) length, and so on can be variously changed.

Also, the information, parameters, and so on described in the present disclosure may be represented in absolute values or in relative values with respect to certain values, or may be represented in another corresponding information. For example, radio resources may be specified by certain indices.

The names used for parameters and so on in the present disclosure are in no respect limiting. Furthermore, mathematical expressions that use these parameters, and so on may be different from those expressly disclosed in the present disclosure. For example, since various channels (PUCCH, PDCCH, and so on) and information elements can be identified by any suitable names, the various names allocated to these various channels and information elements are in no respect limiting.

The information, signals, and so on described in the present disclosure may be represented by using any of a variety of different technologies. For example, data, instructions, commands, information, signals, bits, symbols, chips, and so on, all of which may be referenced throughout the herein-contained description, may be represented by voltages, currents, electromagnetic waves, magnetic fields or particles, optical fields or photons, or any combination of these.

Also, information, signals, and so on can be output in at least one of from higher layers to lower layers and from lower layers to higher layers. Information, signals, and so on may be input and/or output via a plurality of network nodes.

The information, signals, and so on that are input and/or output may be stored in a specific location (for example, a memory) or may be managed by using a management table. The information, signals, and so on to be input and/or output can be overwritten, updated, or appended. The information, signals, and so on that are output may be deleted. The information, signals, and so on that are input may be transmitted to another apparatus.

Reporting of information is by no means limited to the aspects/embodiments described in the present disclosure, and other methods may be used as well. For example, reporting of information in the present disclosure may be implemented by using physical layer signaling (for example, downlink control information (DCI), uplink control information (UCI), higher layer signaling (for example, Radio Resource Control (RRC) signaling, broadcast information (master information block (MIB), system information blocks (SIBs), and so on), Medium Access Control (MAC) signaling and so on), and other signals or combinations of these.

Note that physical layer signaling may be referred to as "Layer 1/Layer 2 (L1/L2) control information (L1/L2 control signals)," "L1 control information (L1 control signal)," and so on. Also, RRC signaling may be referred to as an "RRC message," and can be, for example, an RRC connection setup message, an RRC connection reconfiguration message, and so on. Also, MAC signaling may be reported using, for example, MAC control elements (MAC CEs).

Also, reporting of certain information (for example, reporting of "X holds") does not necessarily have to be reported explicitly, and can be reported implicitly (by, for example, not reporting this certain information or reporting another piece of information).

Determinations may be made in values represented by one bit (0 or 1), may be made in Boolean values that represent true or false, or may be made by comparing numerical values (for example, comparison against a certain value).

Software, whether referred to as "software," "firmware," "middleware," "microcode," or "hardware description language," or called by other terms, should be interpreted broadly to mean instructions, instruction sets, code, code segments, program codes, programs, subprograms, software modules, applications, software applications, software packages, routines, subroutines, objects, executable files, execution threads, procedures, functions, and so on.

Also, software, commands, information, and so on may be transmitted and received via communication media. For example, when software is transmitted from a website, a server, or other remote sources by using at least one of wired technologies (coaxial cables, optical fiber cables, twisted-pair cables, digital subscriber lines (DSL), and so on) and wireless technologies (infrared radiation, microwaves, and so on), at least one of these wired technologies and wireless technologies are also included in the definition of communication media.

The terms "system" and "network" used in the present disclosure are used interchangeably. The "network" may mean an apparatus (for example, a base station) included in the network.

In the present disclosure, the terms such as "precoding," a "precoder," a "weight (precoding weight)," "quasi-co-location (QCL)," a "Transmission Configuration Indication state (TCI state)," a "spatial relation," a "spatial domain filter," a "transmit power," "phase rotation," an "antenna port," an "antenna port group," a "layer," "the number of layers," a "rank," a "resource," a "resource set," a "resource group," a "beam," a "beam width," a "beam angular degree," an "antenna," an "antenna element," a "panel," and so on can be used interchangeably.

In the present disclosure, the terms such as a "base station (BS)," a "radio base station," a "fixed station," a "NodeB," an "eNB (eNodeB)," a "gNB (gNodeB)," an "access point," a "transmission point (TP)," a "reception point (RP)," a "transmission/reception point (TRP)," a "panel," a "cell," a "sector," a "cell group," a "carrier," a "component carrier," and so on can be used interchangeably. The base station may be referred to as the terms such as a "macro cell," a small cell," a "femto cell," a "pico cell," and so on.

A base station can accommodate one or a plurality of (for example, three) cells. When a base station accommodates a plurality of cells, the entire coverage area of the base station can be partitioned into multiple smaller areas, and each smaller area can provide communication services through base station subsystems (for example, indoor small base stations (Remote Radio Heads (RRHs))). The term "cell" or "sector" refers to part of or the entire coverage area of at least one of a base station and a base station subsystem that provides communication services within this coverage.

In the present disclosure, the terms "mobile station (MS)," "user terminal," "user equipment (UE)," and "terminal" may be used interchangeably.

A mobile station may be referred to as a "subscriber station," "mobile unit," "subscriber unit," "wireless unit," "remote unit," "mobile device," "wireless device," "wireless communication device," "remote device," "mobile subscriber station," "access terminal," "mobile terminal," "wireless terminal," "remote terminal," "handset," "user agent," "mobile client," "client," or some other appropriate terms in some cases.

At least one of a base station and a mobile station may be referred to as a "transmitting apparatus," a "receiving apparatus," a "radio communication apparatus," and so on. Note that at least one of a base station and a mobile station may be device mounted on a mobile body or a mobile body itself, and so on. The mobile body may be a vehicle (for example, a car, an airplane, and the like), may be a mobile body which moves unmanned (for example, a drone, an automatic operation car, and the like), or may be a robot (a manned type or unmanned type). Note that at least one of a base station and a mobile station also includes an apparatus which does not necessarily move during communication operation. For example, at least one of a base station and a mobile station may be an Internet of Things (IoT) device such as a sensor, and the like.

Furthermore, the base station in the present disclosure may be interpreted as a user terminal. For example, each aspect/embodiment of the present disclosure may be applied to the structure that replaces a communication between a base station and a user terminal with a communication between a plurality of user terminals (for example, which may be referred to as "Device-to-Device (D2D)," "Vehicle-to-Everything (V2X)," and the like). In this case, user terminals 20 may have the functions of the base stations 10 described above. The words "uplink" and "downlink" may be interpreted as the words corresponding to the terminal-to-terminal communication (for example, "side"). For example, an uplink channel, a downlink channel and so on may be interpreted as a side channel.

Likewise, the user terminal in the present disclosure may be interpreted as base station. In this case, the base station 10 may have the functions of the user terminal 20 described above.

Actions which have been described in the present disclosure to be performed by a base station may, in some cases, be performed by upper nodes. In a network including one or a plurality of network nodes with base stations, it is clear that various operations that are performed to communicate with terminals can be performed by base stations, one or more network nodes (for example, Mobility Management Entities (MMEs), Serving-Gateways (S-GWs), and so on may be possible, but these are not limiting) other than base stations, or combinations of these.

The aspects/embodiments illustrated in the present disclosure may be used individually or in combinations, which may be switched depending on the mode of implementation. The order of processes, sequences, flowcharts, and so on that have been used to describe the aspects/embodiments in the present disclosure may be re-ordered as long as inconsistencies do not arise. For example, although various methods have been illustrated in the present disclosure with various components of steps in exemplary orders, the specific orders that are illustrated herein are by no means limiting.

The aspects/embodiments illustrated in the present disclosure may be applied to Long Term Evolution (LTE), LTE-Advanced (LTE-A), LTE-Beyond (LTE-B), SUPER 3G, IMT-Advanced, 4th generation mobile communication system (4G), 5th generation mobile communication system (5G), 6th generation mobile communication system (6G), xth generation mobile communication system (xG) (xG (x is, for example, an integer or a decimal)), Future Radio Access (FRA), New-Radio Access Technology (RAT), New Radio (NR), New radio access (NX), Future generation radio access (FX), Global System for Mobile communications (GSM (registered trademark)), CDMA 2000, Ultra Mobile Broadband (UMB), IEEE 802.11 (Wi-Fi (registered trademark)), IEEE 802.16 (WiMAX (registered trademark)), IEEE 802.20, Ultra-WideBand (UWB), Bluetooth (registered trademark), systems that use other adequate radio communication methods and nextgeneration systems that are enhanced based on these. A plurality of systems may be combined (for example, a combination of LTE or LTE-A and 5G, and the like) and applied.

The phrase "based on" (or "on the basis of") as used in the present disclosure does not mean "based only on" (or "only on the basis of"), unless otherwise specified. In other words, the phrase "based on" (or "on the basis of") means both "based only on" and "based at least on" ("only on the basis of" and "at least on the basis of").

Reference to elements with designations such as "first," "second," and so on as used in the present disclosure does not generally limit the quantity or order of these elements. These designations may be used in the present disclosure only for convenience, as a method for distinguishing between two or more elements. Thus, reference to the first and second elements does not imply that only two elements may be employed, or that the first element must precede the second element in some way.

The term "judging (determining)" as in the present disclosure herein may encompass a wide variety of actions. For example, "judging (determining)" may be interpreted to mean making "judgments (determinations)" about judging, calculating, computing, processing, deriving, investigating, looking up, search and inquiry (for example, searching a table, a database, or some other data structures), ascertaining, and so on.

Furthermore, "judging (determining)" may be interpreted to mean making "judgments (determinations)" about receiving (for example, receiving information), transmitting (for example, transmitting information), input, output, accessing (for example, accessing data in a memory), and so on.

In addition, "judging (determining)" as used herein may be interpreted to mean making "judgments (determinations)" about resolving, selecting, choosing, establishing, comparing, and so on. In other words, "judging (determining)" may be interpreted to mean making "judgments (determinations)" about some action.

In addition, "judging (determining)" may be interpreted as "assuming," "expecting," "considering," and the like.

The term "maximum transmission power" described in the present disclosure may mean the maximum value of transmission power, may mean the nominal UE maximum transmit power, or may mean the rated UE maximum transmit power.

The terms "connected" and "coupled," or any variation of these terms as used in the present disclosure mean all direct or indirect connections or coupling between two or more elements, and may include the presence of one or more intermediate elements between two elements that are "connected" or "coupled" to each other. The coupling or connection between the elements may be physical, logical, or a combination thereof. For example, "connection" may be interpreted as "access."

In the present disclosure, when two elements are connected, the two elements may be considered "connected" or "coupled" to each other by using one or more electrical wires, cables and printed electrical connections, and, as some non-limiting and non-inclusive examples, by using electromagnetic energy having wavelengths in radio frequency regions, microwave regions, (both visible and invisible) optical regions, or the like.

In the present disclosure, the phrase "A and B are different" may mean that "A and B are different from each other." Note that the phrase may mean that "A and B is each different from C." The terms "separate," "be coupled," and so on may be interpreted similarly to "different."

When terms such as "include," "including," and variations of these are used in the present disclosure, these terms are intended to be inclusive, in a manner similar to the way the term "comprising" is used. Furthermore, the term "or" as used in the present disclosure is intended to be not an exclusive disjunction.

For example, in the present disclosure, when an article such as "a," "an," and "the" in the English language is added by translation, the present disclosure may include that a noun after these articles is in a plural form.

Now, although the invention according to the present disclosure has been described in detail above, it should be obvious to a person skilled in the art that the invention according to the present disclosure is by no means limited to the embodiments described in the present disclosure. The invention according to the present disclosure can be implemented with various corrections and in various modifications, without departing from the spirit and scope of the invention defined by the recitations of claims. Consequently, the description of the present disclosure is provided only for the purpose of explaining examples, and should by no means be construed to limit the invention according to the present disclosure in any way.

## Claims

1. A terminal comprising:
a receiving section that receives information on change of a correspondence relation between one or more antenna points disposed on a movement path and one or more antenna groups including the one or more antenna points; and
a control section that controls reception of at least one of a downlink channel and a reference signal, based on the information.

2. The terminal according to claim 1, wherein
the information includes at least one of an order of change of each antenna group, the number of changes in the antenna group, a moving speed, quasi-co-location (QCL) corresponding to the antenna group, and a cell ID applied to the antenna group.

3. The terminal according to claim 2, wherein
the control section judges, based on the information, a duration in which QCL applied to at least one of a downlink channel and a reference signal is identical.

4. The terminal according to claim 2, wherein
the control section judges that a cell ID applied to the one or more antenna groups is identical.

5. A radio communication method for a terminal, the radio communication method comprising:
receiving information on change of a correspondence relation between one or more antenna points disposed on a movement path and one or more antenna groups including the one or more antenna points; and
controlling reception of at least one of a downlink channel and a reference signal, based on the information.

6. A base station comprising:
a transmitting section that transmits information on change of a correspondence relation between one or more antenna points disposed on a movement path and one or more antenna groups including the one or more antenna points; and
a control section that controls transmission of at least one of a downlink channel and a reference signal, based on the information.
